# EUROPEAN PATENT APPLICATION

(11) **EP 1 408 413 A1**
(43) Date of publication of application: **14.04.2004**
(21) Application number: 02745962.7
(22) Date of filing: 11.07.2002
(51) Int. Cl.: G06F 13/00, G06F 17/30, G06F 17/60

(54) **INFORMATION DELIVERY SERVER, COUNTING SYSTEM, INFORMATION DELIVERY SYSTEM, INFORMATION DELIVERY METHOD, COUNTING METHOD, AND RECORDING MEDIUM**

(30) Priority: 13.07.2001 JP 2001214433; 07.02.2002 JP 2002031531
(71) Applicant: Sony Corporation, Tokyo 141-0001 (JP); Toppan Printing Co., Ltd., Taito-ku, Tokyo 110-0016 (JP)
(72) Inventor: SUGIMOTO, Michitoshi, c/o Sony Corporation, Tokyo 141-0001 (JP); YABUSAKI, Masami, c/o Sony Corporation, Tokyo 141-0001 (JP); OGURA, Masatoshi, c/o Toppan Printing Co., Ltd., Tokyo 110-0016 (JP)
(74) Representative: Maury, Richard Philip
(86) International application number: PCT/JP2002/007050
(87) International publication number: WO 2003/029987

(57) **Abstract**

The present invention takes as its objective to provide a system for guiding persons who visit a facility, which can simply produce detailed guide information which each enterprise possesses, and which can provide it to a person who visits in a timely manner. The present invention is an information distribution server which is utilized in an information distribution system which distributes information for distribution to a portable terminal, and includes: a registration information reception means which obtains signal destination information, which is information for specifying a portable terminal which is to become the object of distribution of the information for distribution, as registration information, and accepts it as a registration; an information for distribution database which stores information for distribution for which a time instant at which it should be distributed has been set in advance as a distribution time point; and a distribution means which, based upon the distribution time point which is set in the information for distribution which has been stored in the information for distribution database, performs distribution to the portable terminal to which the signal destination information which is included in the registration information is set.

## Description

### Technical Field

This invention is one which relates to an information distribution system which distributes information to a plurality of users who have been registered.

### Background Art

For a compound business facility in which a plurality of enterprises such as restaurants, cinemas, goods sales outlets and the like are collected together, it is known to perform guiding to each enterprise within the compound business facility for persons who visit. This guiding is performed, for example, by distributing paper handouts or pamphlets, by posting signs, or the like.

Persons who visit this compound business facility take advantage of these guides or distributed materials or the like to roam the compound business facility according to their own desires, to purchase goods, and to receive services.

However problems arise with the above described method of guidance, as described below.
1) When distributing paper handouts or pamphlets or posting signs, when once the contents of the guide have been determined, if these contents are to be changed, it is necessary to reprint the matter to be distributed, or to remake the signs which are posted, which is undesirable; and accordingly it is troublesome to change the contents, since the labor and the cost increase undesirably due to such changes; and thus the contents are not changed for a considerable time.
2) Since a certain production time period is required for distributing paper handouts or pamphlets, or for printing and making signs, it is necessary to plan and fix the contents of the guide several months in advance. Accordingly, a large time difference is engendered between the time of production and the time point at which persons who visit are actually guided, and it is not possible to perform guiding with contents which are timely.
3) With distributing paper handouts or pamphlets or posting signs, the space for displaying information is limited, and it is difficult to display detailed contents for each enterprise.
4) Since the transmission of the information in the guide is entrusted independently to each of the persons who visit, it is difficult to convey the contents of the guide. This is because it is necessary for the persons who visit to take the paper handouts or pamphlets, or to read the signs, independently.
5) Since, for a promotional activity which is being performed individually by some enterprise within the compound business facility, this cannot be displayed in the announcement materials (pamphlets or the like) which are made for the entire facility, accordingly it is not possible to guide the persons who visit in an efficient manner, so that a promotion loss occurs.
6) There have been difficulties in reaping the full benefits of guidance.

### Disclosure of the Invention

The present invention has been conceived of in the light of this type of circumstance, and its objective is to provide a system for guidance of persons who visit a facility, which can simply prepare detailed guide information as possessed by each enterprise therein, and which can present this information to persons who visit in a timely manner.

Furthermore, an objective of the present invention is to provide a system for guidance of persons who visit a facility, which can provide the necessary information simply, from the point of view of the persons who visit, for each enterprise within the compound business facility.

Furthermore, an objective of the present invention is to provide a system for guidance of persons who visit a facility, which can evaluate the results of the guide information which has been presented to the persons who visit.
(1) In order to implement the above described objectives, according to the present invention, an information distribution server which is utilized in an information distribution system which distributes information for distribution to a portable terminal is characterized by comprising: a registration information reception means which obtains signal destination information, which is information for specifying a portable terminal which is to become the object of distribution of the information for distribution, as registration information, and accepts it as a registration; an information for distribution database which stores information for distribution for which a time instant at which it should be distributed has been set in advance as a distribution time point; and a distribution means which, based upon the distribution time point which is set in the information for distribution which has been stored in the information for distribution database, distributes the information for distribution to the portable terminal to which the signal destination information which is included in the registration information is set.
(2) Furthermore, according to the present invention, an information distribution server which is utilized in an information distribution system which distributes information for distribution to a portable terminal is characterized by comprising: a registration information reception means which obtains signal destination information, which is information for specifying a portable terminal which is to become the object of distribution of said information for distribution, as registration information, and accepts it as a registration; an information for distribution database which stores information for distribution for which a time at which it should be distributed, based upon the passage of time from the start of distribution of information for distribution to said portable terminal, has been set in advance as a time for distribution; and a distribution means which, based upon the time for distribution which is set in the information for distribution which has been stored in said information for distribution database, and upon the passage of time from the start of distribution of information for distribution to said portable terminal, distributes said information for distribution to the portable terminal to which the signal destination information which is included in said registration information is set.
(3) Furthermore, according to the present invention, the above described information distribution server (1) and (2) are characterized in that: in said registration information, there is included category information which shows a category for a person who is visiting and is carrying said portable terminal; distribution category information which specifies a category to be an object for distribution is further set in advance in said information for distribution; and said distribution means, when distributing said information for distribution, distributes said information for distribution to a portable terminal for which has been set signal destination information for which category information is set which corresponds to distribution category information which has been set in said information for distribution.
(4) Furthermore, according to the present invention, an information distribution server which is utilized in an information distribution system which distributes information for distribution to a portable terminal is characterized by comprising: a registration information reception means which obtains signal destination information, which is information for specifying a portable terminal which is to become the object of distribution of said information for distribution, and category information, which shows a category for a person who is visiting and is carrying said portable terminal, as registration information, and accepts it as a registration; an information for distribution database which stores information for distribution for which distribution category information which specifies a classification for an object of distribution has been set in advance; and a distribution means which, when distributing said information for distribution, distributes said information for distribution to a portable terminal which has been prescribed in the signal destination information for which category information is set which corresponds to distribution category information which has been set in said information for distribution.
(5) Furthermore, according to the present invention, the above described information distribution server is characterized in that at least one of property, intention. time zone, and place is included in said category information and said distribution category information.
(6) Furthermore, according to the present invention, the above described information distribution server is characterized in that said information for distribution is guide information for guiding within a facility.
(7) Furthermore, according to the present invention, the above described information distribution server is characterized in that said information for distribution is information which can be distributed electronically.
(8) Furthermore, according to the present invention, the above described information distribution server is characterized in that said information for distribution includes information related to at least one of amusement information, a moving image, a game, a program, an electronic coupon, and a ticket.
(9) Furthermore, according to the present invention, the above described information distribution server is characterized in that said obtaining of said registration information is performed within said facility.
(10) Furthermore, according to the present invention, a totaling system which totalizes the utilization circumstances of information for distribution which has been distributed by an information distribution server as described in any one of (1) to (9) is characterized by comprising: an ID information obtaining means which obtains ID information which, along with being established in correspondence with the signal distribution information, is appended to said information for distribution and is distributed; a utilization information obtaining means which obtains utilization information, which is information related to utilization of the facility by the person who is visiting and who is carrying said portable terminal; and a total information database which establishes and stores a correspondence between said ID information which is obtained by said ID information obtaining means and said utilization information which is obtained by said utilization information obtaining means.
(11) Furthermore, according to the present invention, the above described totaling system (10) is characterized in that said information for distribution to which said ID information is appended includes information related to electronic coupons.
(12) Furthermore, according to the present invention, the above described totaling system (10) and (11) are characterized in that said utilization information includes either or both information about the time instant of utilization of an enterprise which is provided within said facility, and information about the amount of utilization money which has been utilized by the person who is visiting at said enterprise.
(13) Furthermore, according to the present invention, an information distribution server which is utilized in an information distribution system which distributes information for distribution to a portable terminal is characterized by comprising an information for distribution management section which sets, in said information for distribution: information of a distribution time point which is specified, or information of a time at which distribution must be performed which is determined based upon the passage of time from the start of distribution of the information for distribution to said portable terminal; and distribution category information which specifies a category which is included in the registration information of the object for dispatch.
(14) Furthermore, according to the present invention, an information distribution system which comprises an information distribution server which distributes information for distribution to a portable terminal, and a totaling system which totals the utilization circumstances of said information for distribution which is distributed by said information distribution server, is characterized in that: said information distribution server comprises: a registration information reception means which obtains signal destination information, which is information for specifying a portable terminal which is to become the object of distribution of said information for distribution, as registration information, and accepts it as a registration; an information distribution database which stores information for distribution for which a time instant at which it should be distributed is set in advance as a distribution time point, or information for distribution for which a time at which it should be distributed which is determined based upon the passage of time from the start of distribution of the information for distribution to said portable terminal is set in advance as a time for distribution; and a distribution means which performs distribution to the portable terminal for which the signal destination information which is included in said registration information is set, based upon the distribution time point or the time for distribution which is set in the information for distribution which has been stored in said information for distribution database; and said totaling system comprises: an ID information obtaining means which obtains ID information which, along with being established in correspondence with said signal distribution information, is appended to said information for distribution and is distributed; a utilization information obtaining means which obtains utilization information, which is information related to utilization of the facility by the person who is visiting and who is carrying said portable terminal; and a total information database which establishes and stores a correspondence between said ID information which is obtained by said ID information obtaining means and said utilization information which is obtained by said utilization information obtaining means.
(15) Furthermore, according to the present invention, an information distribution method which is utilized by an information distribution system which distributes information for distribution to a portable terminal is characterized in that: signal destination information, which is information for specifying a portable terminal which is to become the object of distribution of said information for distribution, is obtained as registration information, and is accepted as a registration; information for distribution for which a time instant at which it should be distributed is set in advance as a distribution time point, or information for distribution for which a time at which it should be distributed which is determined based upon the passage of time from the start of distribution of the information for distribution to said portable terminal is set in advance as a time for distribution, is stored; and distribution is performed to the portable terminal for which the signal destination information which is included in said registration information is set, based upon the distribution time point or the time for distribution which is set in said stored information for distribution.
(16) Furthermore, according to the present invention, a totaling method which totals the utilization circumstances of information for distribution which has been distributed by an information distribution server is characterized in that: ID information is obtained and, along with being established in correspondence with signal distribution information, is appended to said information for distribution and is distributed; utilization information, which is information related to utilization of a facility by a person who is visiting and who is carrying said portable terminal, is obtained; and a correspondence is established and stored between said ID information which has been obtained and said utilization information.
(17) Furthermore, according to the present invention, a recording medium on which is recorded an information distribution program, which can be read in by a computer, which is used in an information distribution system which distributes information for distribution to a portable terminal, is characterized by causing a computer to execute: a procedure of obtaining signal destination information, which is information for specifying a portable terminal which is to become the object of distribution of said information for distribution, as registration information, and accepting it as a registration; a procedure of storing information for distribution for which a time instant at which it should be distributed is set in advance as a distribution time point, or information for distribution for which a time at which it should be distributed which is determined based upon the passage of time from the start of distribution of the information for distribution to said portable terminal is set in advance as a time for distribution; and a procedure of performing distribution to the portable terminal for which the signal destination information which is included in said registration information is set, based upon the distribution time point or the time for distribution which is set in said information for distribution which has been stored.
(18) Furthermore, according to the present invention, a recording medium on which is recorded a totaling program, which can be read in by a computer, which totals the utilization circumstances of information for distribution which has been distributed by an information distribution server, is characterized by causing a computer to execute: a procedure of obtaining ID information and, along with establishing it in correspondence with signal distribution information, appending it to said information for distribution and distributing them; a procedure of obtaining utilization information, which is information related to utilization of a facility by a person who is visiting and who is carrying said portable terminal; and a procedure of establishing and storing a correspondence between said ID information which has been obtained and said utilization information.
(19) Furthermore, according to the present invention, an information distribution program which is used in an information distribution system which distributes information for distribution to a portable terminal, is characterized by causing a computer to execute: a procedure of obtaining signal destination information, which is information for specifying a portable terminal which is to become the object of distribution of said information for distribution, as registration information, and accepting it as a registration; a procedure of storing information for distribution for which a time instant at which it should be distributed is set in advance as a distribution time point, or information for distribution for which a time at which it should be distributed which is determined based upon the passage of time from the start of distribution of the information for distribution to said portable terminal is set in advance as a time for distribution; and a procedure of performing distribution to the portable terminal for which the signal destination information which is included in said registration information is set, based upon the distribution time point or the time for distribution which is set in said information for distribution which has been stored.
(20) Furthermore, according to the present invention, a totaling program which totals the utilization circumstances of information for distribution which has been distributed by an information distribution server is characterized by causing a computer to execute: a procedure of obtaining ID information and, along with establishing it in correspondence with signal distribution information, appending it to said information for distribution and distributing them; a procedure of obtaining utilization information, which is information related to utilization of a facility by a person who is visiting and who is carrying said portable terminal; and a procedure of establishing and storing a correspondence between said ID information which has been obtained and said utilization information.

### Brief Disclosure of Drawings

FIG. 1 is a schematic block diagram showing the structure of a system 10 for guiding persons who visit a facility, to which an information distribution server and a totaling system according to an embodiment of this invention have been applied.
FIG. 2 is a figure for explanation of the function of an information for distribution management section 15.
FIG. 3 is a figure for explanation of the function of the information for distribution management section 15.
FIG. 4 is a flow chart for explanation of the operation of the system 10 for guiding persons who visit a facility, for distributing information for distribution.
FIG. 5 is a figure showing an example of registration information which is stored by categories in a signal destination information database 13.
FIG. 6 is a figure for explanation of when setting up a formation.
FIG. 7 is a figure for explanation of when setting up a formation.
FIG. 8 is a figure for explanation of when setting up a formation.
FIG. 9 is a figure for explanation of when setting up a formation.
FIG. 10 is a figure for explanation of when setting up a formation.
FIG. 11 is a figure for explanation of a checking procedure for checking a situation which is being displayed upon a screen of a portable telephone device, when information for distribution has been distributed.
FIG. 12 is a figure for explanation of a checking procedure for checking a situation which is being displayed upon a screen of a portable telephone device, when information for distribution has been distributed.
FIG. 13 is a figure for explanation of a checking procedure for checking a situation which is being displayed upon a screen of a portable telephone device, when information for distribution has been distributed.
FIG. 14 is a figure for explanation of information which is transmitted from a portable telephone device to an information distribution server 1, when mail is transmitted from a welcome page.
FIG. 15 is a schematic block diagram showing the structure of an information distribution system according to a second embodiment.
FIG. 16 is a figure for explanation of the category information.
FIG. 17A and FIG. 17B are figures for explanation of a solid formation and an offset formation which are set up for the information for distribution.
FIG. 18 is a figure for explanation of the form of a tag 70 in another embodiment.
FIG. 19 is a flow chart for explanation of processing which is performed by an information distribution system according to the second embodiment, for distributing information for distribution.
FIG. 20 is a figure for explanation of changing over of a display screen of a portable telephone device 3 of the second embodiment.
FIG. 21 is a figure for explanation of a roaming range, when setting up a place as category information.
FIG. 22 is a figure for explanation of the timing at which electronic mail is dispatched to the portable telephone device 3, when "place" has been set up in the category information.
FIG. 23 is a figure for explanation of the circumstances in which information for distribution is distributed, when "property" has been set up as the category information.
FIG. 24 is a figure for explanation of the circumstances in which information for distribution is distributed, when "intention" has been set up as the category information.
FIG. 25 is a figure for explanation of the information for distribution which is distributed, when the category information "time zone" has been set up.
FIG. 26 is a figure showing an example of the case when the contents of the information for distribution are to be changed for a specified day.
FIG. 27A to FIG. 27C are figures showing an example of a scenario template.
FIG. 28 is a figure showing an example of an editing screen when creating a scenario.
FIG. 29 is a figure showing an example of a mail text creation screen of a scenario.
FIG. 30 is a figure showing an example of a screen for checking a list of scenarios which have been made.
FIG. 31A to FIG. 31C are figures for explanation of a table.
FIG. 32 is a figure showing an example of an editing screen when creating a table.
FIG. 33 is a figure showing an example of a screen upon which table set up is performed.
FIG. 34A and FIG. 34B are figure showing an example of a scenario selection screen.
FIG. 35 is a figure for explanation of a formation.
FIG. 36 is a figure for explanation of a solid table and an offset table which are provided for a formation.
FIG. 37 is a figure showing an example of an editing screen when creating a formation.
FIG. 38 is a figure showing an example of a formation basic information setting screen.
FIG. 39 is a figure showing an example of a table selection screen.
FIG. 40 is a figure for explanation of a component.
FIG. 41 is a figure showing an example of an editing screen when creating a component.
FIG. 42 is a figure showing an example of a screen for setting component basic information.
FIG. 43 is a figure showing an example of a formation selection screen.
FIG. 44 is a figure showing an example of a screen for creating and editing a component, on which a schedule of the component is displayed.

### Explanation of the Reference Symbols

1 ∼ information distribution server; 2 - totaling system; 3 ∼ portable telephone device; 4 ∼ information terminal; 5 ∼ wireless base station; 6 ∼ enterprise terminal; 7 ∼ network; 10 ∼ system for guiding people who visit a facility; 11 ∼ registration information reception section; 12 ∼ information for distribution database; 13 ∼ signal destination information database; 14 ∼ signal distribution section; 15 ∼ information for distribution management section; 21 ∼ information acquisition section; 22 ∼ total information database; 23 ∼ totaling section; 50 ∼ reader-writer; 51 ∼ scanner management device; 70 ∼ tag.

### Best Mode for Carrying Out the Invention

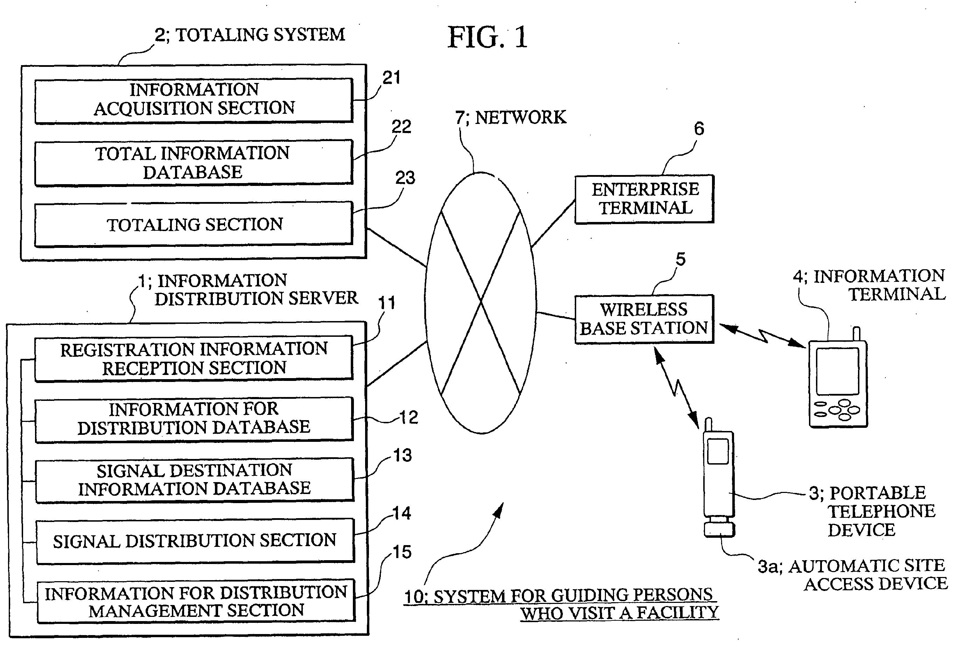

In the following, information distribution systems according to various embodiments of the present invention will be explained with reference to the figures. FIG. 1 is a schematic block diagram showing the structure of a system 10 for guiding persons who visit a facility, to which an information distribution server and a totaling system according to an embodiment of this invention have been applied.

In the system 10 of this figure for guiding persons who visit a facility, an information distribution server 1, a totaling system 2, a wireless base station 5 which is connected by wireless to a portable telephone device 3 and an information terminal 4, and an enterprise terminal 6 are connected together via a network 7, and are provided within a compound business facility in which a plurality of enterprises, for example restaurants, cinemas, goods sales outlets and the like, are collected together.

The portable telephone device 3 and the information terminal 4 are carried by persons who visit the compound business facility, and are portable terminals which perform communication by wireless with the wireless base station 5 which is connected to the network. Although, in FIG. 1, only the portable telephone device 3 and the information terminal 4 are shown as portable terminals, the portable terminals are not limited to these, provided that they are endowed with the functions of information being set which specifies a signal destination like an electronic mail address or a telephone number or the like, and of receiving contents. For example, a PDA (Personal Digital Assistant), a game machine, a pager which is a portable wireless summoning device, or the like will be acceptable. Furthermore, more than two of these portable terminals may be connected, although only two are shown in FIG. 1.

Furthermore, by "persons who visit " is here meant users who take advantage of the information distribution service provided by the information distribution system of the present invention.

By being connected to a data transmission terminal of the portable telephone device 3, an automatic site access device 3a is endowed with a function of automatically accessing a home page (hereinafter termed a "welcome page") for attendance registration to the distribution service for the information which is to be distributed of the system 10 for guiding persons who visit a facility.

Furthermore, the automatic site access device 3a is endowed with functions of reading out signal destination information such as an electronic mail address or the like which is set in the portable telephone device 3 to which it is connected, and device type information, which is information related to the device type of the portable telephone device 3, and of transmitting the electronic mail address and the device type information which it has read out to the information distribution server 1 with the portable telephone device 3, via the wireless base station 5 and the network 7.

The information distribution server 1 is made up from a registration information reception section 11, an information for distribution database 12, a signal destination information database 13, a signal distribution section 14, and an information for distribution management section 15.

The registration information reception section 11 obtains registration information which includes signal destination information of the portable terminal which is to become the object of distribution of the information which is to be distributed, category information, and device type information which gives the device type of the portable terminal, accepts the registration, and stores it in the signal destination information database 13.

Here by "signal destination information" is meant information which is used for specifying the portable terminal for distributing the information which is to be distributed; and, for example, this may be an electronic mail address or a telephone number or the like. By "category information" is meant information which specifies properties of the person who visits the facility, and, for example, "couple" may designate persons who visit as a couple, "fellow with friends" may designate a visit as a friend among fellows, "family" may show a visit as a family, and the like.

The registration information includes the signal destination information and the category information.

The information for distribution is the original information (contents) which is to be presented to the persons who visit, and which, when being distributed to the persons who visit, is processed in various manners according to scenarios. Furthermore, for example, this information for distribution may be guide information for guiding within the facility, or may be amusement information, moving images, games, programs, electronic coupons, tickets, electronic mail or the like - in fact, any type of information which can be transmitted in an electronic manner.

It should be understood that with this first embodiment of the present invention the information for distribution and the scenarios are used without any distinction.

The information for distribution database 12 (hereinafter termed the "distribution DB"), along with time instants at which distribution should be performed being set in advance as distribution time instants, also stores information for distribution for which property information which designates a property of the object of distribution has been set in advance. It should be understood that, here, "information for distribution for which property information which designates a property of the object of distribution has been set in advance" corresponds to the above described "information for which distribution category information which designates a classification of the object of distribution has been set in advance ".

The signal destination information database 13 (hereinafter termed the "signal destination DB") stores the signal destination information, which is the registration information which has been acquired by the registration information reception section 11, and the category information, in correspondence with one another.

The signal distribution section 14 distributes the information for distribution which has been stored in the information for distribution database 12 with respect to the signal destination information which is included in the registration information, based upon the distribution time instants which have been set.

Furthermore, when distributing the information which is to be distributed, the signal distribution section 14 reads out from the signal destination DB 13 the registration information which corresponds to the property information which has been set in the information for distribution, and distributes it to the portable terminal of the applicable registration information. To express this in a more compact manner, it reads out the signal destination information for which category information has been set which corresponds to the property information which has been set in the information for distribution. And the signal distribution section 14 distributes the information for distribution to the portable terminal, based upon the signal destination information which it has read out.

Yet further, the signal distribution section 14 converts the format of the information for distribution which is to be distributed based upon the device type information which is included in the registration information, and distributes it to the portable terminal which is specified in the signal destination information for which correspondence has been established to this device type information.

It should be understood that the signal distribution section 14 obtains the present time instant based upon a clock (a clock function) which it contains internally.

The information for distribution management section 15 receives information for distribution whose distribution has been entrusted from each enterprise within the compound business facility, or reads it in from a recording medium upon which or information for distribution is stored, performs preparations for distribution of the information for distribution, and stores it in the distribution DB 12. These preparations for distribution of the information for distribution consist of performing a setting for, according to the passage of time (according to a time schedule), transmitting, to the portable terminals which the various persons who visit are carrying, information for distribution whose contents correspond to each of the persons who visit and who have been classified according to the category information among the information for distribution which has been obtained from the various enterprises and whose distribution has been entrusted. This setting is termed setting of property information and distribution time instant to the information for distribution. Furthermore, this property information is information which is provided corresponding to the category information of the persons who visit. For example, the property that the category information is "couple" may be set as property information in the information for distribution distributed to the persons who visit whose category information is "couple" .

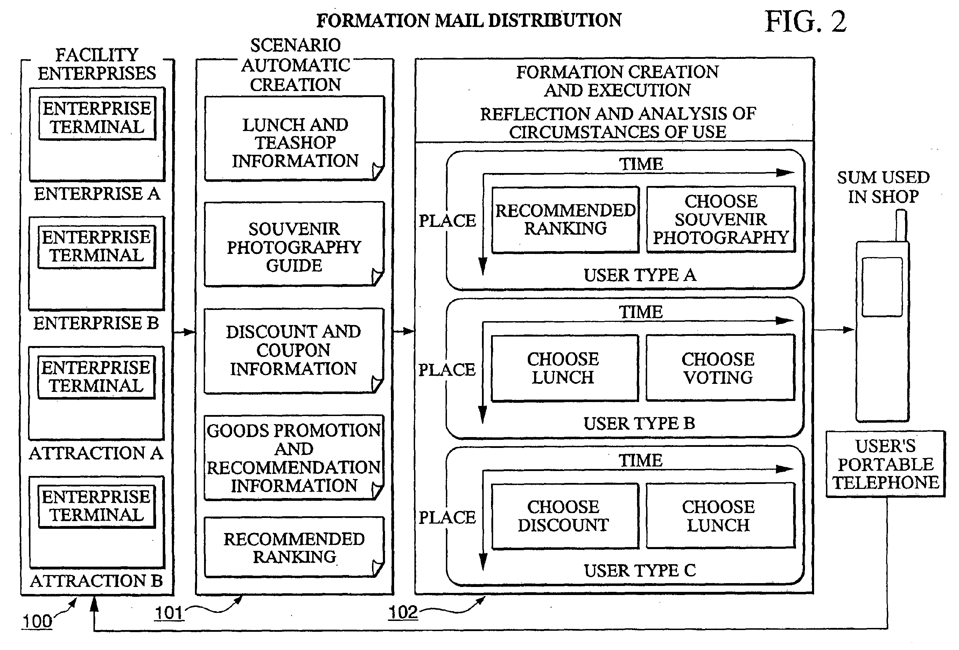

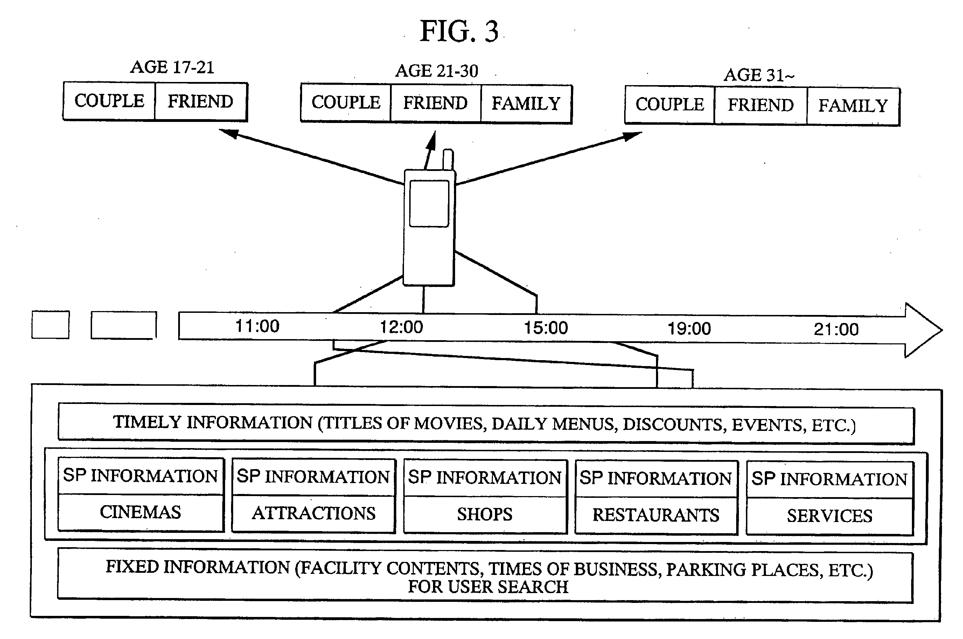

Now, the function of the information for distribution management section 15 will be explained in greater detail using FIGS. 2 and 3.

Referring to FIG. 2, the information for distribution management section 15 constructs a scenario (the reference symbol 101) to be distributed to the persons who visit, using the contents of the information for distribution (the reference symbol 100) which is stored in the distribution DB 12 and which has been entrusted for distribution from the enterprises in the facility. Here, the information for distribution which has been entrusted for distribution is classified into genres according to the contents which are to be distributed, like "lunch and teashop information", "souvenir photograph guide", "discount and coupon information", and the like.

And, the formation of the scenario which has been constructed is set (the reference symbol 102) according to the property information and the flow of time. For the case in which the property information is user type A, after distributing the information "recommendation ranking", a time schedule is set as a formation for distribution of the information "souvenir photography amusement" at a time instant which has been set.

When a formation is set in this manner, it is possible to distribute in order the information for distribution which has been processed in a timely manner in a scenario to the persons who visit who have been classified according to the various category information, according to the flow of time, as shown in FIG. 3. By doing this, the persons who visit are able to obtain in order information about films, daily special menus, discounts, events and the like whose starting time instants have been determined in advance, so that, due to this, it is possible for the persons who visit to roam within the compound business facility without any wasteful activity on their own part.

It is also possible to set property information according to the type (the category information) of the persons who visit, so that, for example, for cases where the category information is "couple", the information for distribution of an enterprise which offers a lunch intended for young people may be distributed before noon, and information for distribution which gives the starting times and the contents of films which start from the time point at which it is surmised that lunch has been finished, and a guide to where they are showing, may be distributed.

In this manner, by distributing the information for distribution along with the passage of time, according to the property information and the flow of time, it is possible to provide the information for distribution which the enterprises wish to recommend in a timely manner according to the types and the needs of the persons who are visiting.

It should be understood that, as fixed information, it is also possible to store in advance information related to times of business within the facility, parking places, and the like; and these may be distributed according to requests from the portable terminals.

Next, returning to FIG. 1, the totaling system 2 is made up from an information acquisition section 21, a total information database 22, and a totaling section 23; and it forms totals of the circumstances of use of the information for distribution which has been distributed by the information distribution server 1.

The information acquisition section 21 obtains ID information which, along with being established in correspondence with the signal destination information, is appended to and is distributed with the information for distribution. Furthermore, the information acquisition section 21 obtains utilization information, which is information related to the utilization of establishments by persons who visit and who carry portable terminals.

Here, the ID information is information which, along with being able to discriminate the information for distribution, can discriminate the portable terminal which is the signal destination. It is possible to apprehend what information for distribution is to be distributed to which portable terminal by utilizing this ID information.

The utilization information includes one or both of the time instant of having utilized an enterprise which is provided within the facility, and the utilization amount of money which the person visiting has utilized at the enterprise. By referring to this utilization information, it is possible to apprehend the time instant at which the person visiting has utilized the enterprise (for example, the instant he has entered the enterprise, and/or the instant he has left it), and the total price of the goods which he has purchased, and/or the price which he has paid for a service. It should be understood that, in this utilization information, there may also be included the name of the goods, or the name of the service, which has been purchased.

This information acquisition section 21 corresponds to the utilization information obtaining means and the ID information obtaining means. Furthermore, the information for distribution to which the ID information is appended may include information related to an electronic coupon. By an electronic coupon is meant, for example, information for causing a coupon which can be utilized in an enterprise within the compound business facility to be displayed upon the screen of the portable terminal, where, by posting the electronic coupon which has been displayed upon the screen at an enterprise, a discounted or privileged service is obtained.

The total information database 22 stores the ID information which has been acquired by the information acquisition section 21 and the utilization information, while establishing a correspondence between them.

The totaling section 23 performs totaling processing for the various types of information which have been stored in the total information database 22.

An enterprise terminal 6 is provided to each enterprise within the compound business facility, and this obtains the ID information and the utilization information which are appended to electronic coupons, and dispatches the ID information and utilization information which it has obtained via the network 7 to the totaling system 2. This obtaining of ID information is performed by the enterprise personnel reading in the ID information which has been displayed upon the screen of the portable terminal and inputting it to the enterprise terminal using an input device such as a ten key pad or the like. Alternatively, the ID information may be displayed upon the screen as a bar code, and this bar code may be read in with a bar code reader, and inputted to the enterprise terminal 6. This enterprise terminal 6, for example, may be constituted by an information processing terminal such as a POS (Point Of Sale), or a personal computer or the like.

The obtaining of the utilization information may utilize, for example, data which has been electronically settled between the portable terminal and the enterprise terminal 6 during a settlement related to utilization of the enterprise, and may be performed by obtaining it along with the information relating to the utilization time point.
Furthermore, the obtaining of the utilization information may, for example, also be performed by the enterprise personnel reading in the ID information which has been displayed upon the screen of the portable terminal, and by them also, at the same time, performing a settlement by typing in the amount of the transaction upon a ten-key pad or the like in a non electronic manner.

The network 7 may be a network which takes advantage of wireless, or alternatively of the internet, a telephone line, a dedicated line, or the like, while taking wireless as its object as well.

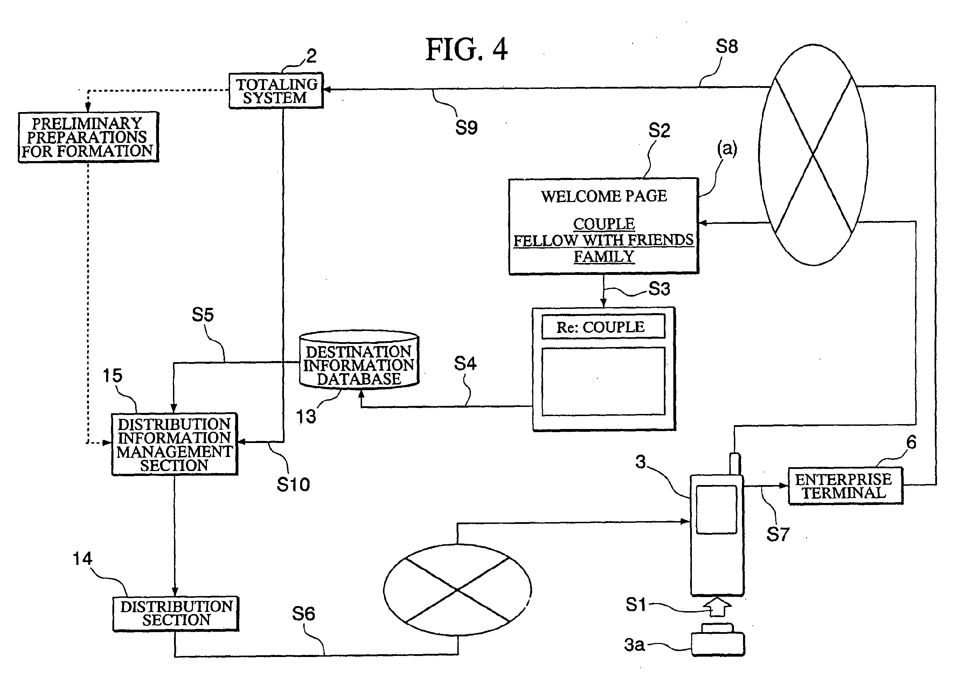

Next, the operation of the system 10 for guiding persons who visit a facility made up as shown in FIG. 1 for distributing information which is to be distributed will be explained using the flow chart of FIG. 4.

Here, distribution preparation of the information for distribution is performed in advance by an active formation function of the information for distribution management section 15, based upon the information for distribution which has been entrusted for distribution by each enterprise within the compound business facility, the time instant when it is ordered to be distributed, and the property information which orders the object of distribution, and it is stored in the information for distribution database 12 in FIG. 1.

Although, in this flow chart of FIG. 4, the explanation is made in terms of the use of the portable telephone device 3 as a portable terminal, the situation is the same for the information terminal 4.

First, when a person who is visiting carrying the portable telephone device 3 attends a location within the compound business facility, the automatic site access device 3a is loaned by the personnel of the compound business facility to the person who is visiting. The person who is visiting connects the automatic site access device 3a to the portable telephone device 3, accesses the welcome page of the information distribution server 1, and performs a request for attendance registration (in the step S1). Here, it may also be the case that he inputs upon an enquiry form signal destination information such as his electronic mail address or the like, category information, and device type information, and proffers it to the enterprise personnel, and the personnel register the information which is entered upon the enquiry form by utilizing a keyboard, a mouse or the like. In this manner, the obtaining of the registration information is performed within the enterprise. Furthermore, it will also be acceptable to obtain the registration information by inputting the signal destination information, the category information, and the device type information by using a computer terminal which is specially provided within the enterprise.

When the welcome page is accessed, a display is provided upon the screen of the portable telephone device 3 for prompting selection of the category information, like, for example, that shown at (a) of FIG. 4. And when, for example, among the category information upon the screen, "couple" is selected and is clicked by the person who visits (in the step S2), then the mail software of the automatic site access device 3a starts to operate, and the signal destination information of the electronic mail address, the device type information, and the category information "couple" are dispatched as reply information (for example, as mail) to the information distribution server 1 from the portable telephone device 3 by an electronic mail address notification function, and are registered as the registration information in the signal destination DB 13 (in the steps S3 and S4). Each time a request for registration of a person who visits occurs, the above described steps S1 through S4 are performed, and the attendance registration procedure is performed.

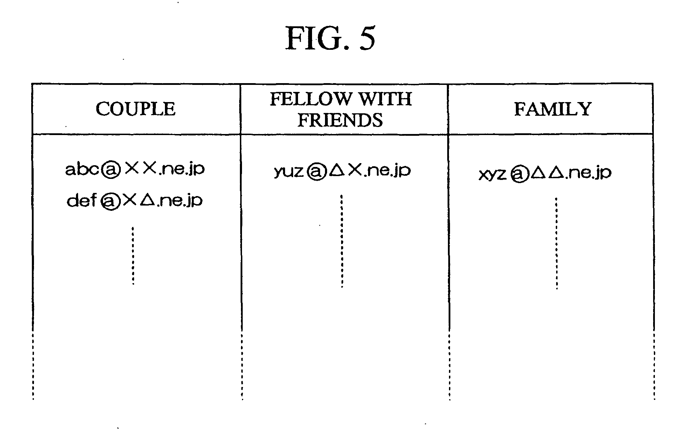

By this attendance registration procedure being performed, for example, as shown in FIG. 5, the signal destination information, which is an example of the registration information in the various types of category information in the database, is registered in the signal destination DB 13. Although it is not so shown in the figure, it should be understood that a correspondence is established and is stored for the device type information as well with the signal destination information such as the electronic mail address or the like.

Next, according to an automatic distribution function, the signal distribution section 14 distributes the information for distribution for which the property information and the distribution time point have been set as electronic mail to the electronic mail address which is the signal destination information which has been stored in the signal destination DB 13. (in the step S5). By doing this, the distribution destination information is distributed as electronic mail according to the category information of the person who is visiting at the time instant which has been designated.

Furthermore, at the time of dispatching the electronic mail, the signal distribution section 14 reads out from the signal destination DB 13 the device type information which corresponds to the electronic mail address which is the signal destination information of the object for dispatch, converts the information for distribution to a format which corresponds to this device type information which has been read out, and distributes it (in the step S6). By doing this, it is possible to distribute the information for distribution which has been made easy to read from the point of view of the person who is visiting. It should be understood that it is presumed that, in this case, data is provided which records a correspondence between the device type information and a format for this device type.

After the electronic mail has been distributed, this electronic mail which has been distributed is displayed upon the screen of the portable telephone device 3. If the information for distribution which has been distributed is related to an electronic coupon, then the coupon is displayed upon the screen along with the ID information. And, if an enterprise which employs the coupon which has been displayed upon the screen is utilized by the person who is visiting and an electronic settlement has been made, then the ID information upon the screen of the portable telephone device 3 is read in by the enterprise personnel of the enterprise, and, along with the ID information from the enterprise terminal 6 to the totaling system 2, the utilization information to the effect that electronic settlement has been performed is dispatched to the totaling system 2 (in the step S7).

In the information acquisition section 21 of the totaling system 2, when it obtains the ID information which has been dispatched from the enterprise terminal 6 by the information acquisition section 21 and the utilization information, the ID information and the utilization information which have been obtained are stored in the total DB 22 with a correspondence being established between them, and it is totaled with the totaling section 23 (in the step S8). This total analyses a relative appraisal between the contents of the information for distribution and its distribution time point, and the utilization ratio and the utilization price and the time of utilization, and performs rank assignment based upon the appraisal result information which has performed the relative appraisal (in the step S9).

This appraisal result is reflected when setting the formation for distributing the information for distribution the next time (in the step S10).

The attendance registration of the person who is visiting is performed according to the procedure which has been explained above, and the information for distribution is distributed at the designated time instant according to the category information of the person who is visiting. By doing this, for example, it is possible to cause the persons who visit to be aware of an event at a specified time.

Next, the procedure for setting a formation will be explained with the use of the figures. Here, the case of setting a formation with the information for distribution management section 15 of the information distribution server 1 using an input device such as a keyboard or a mouse which is provided externally will be explained.

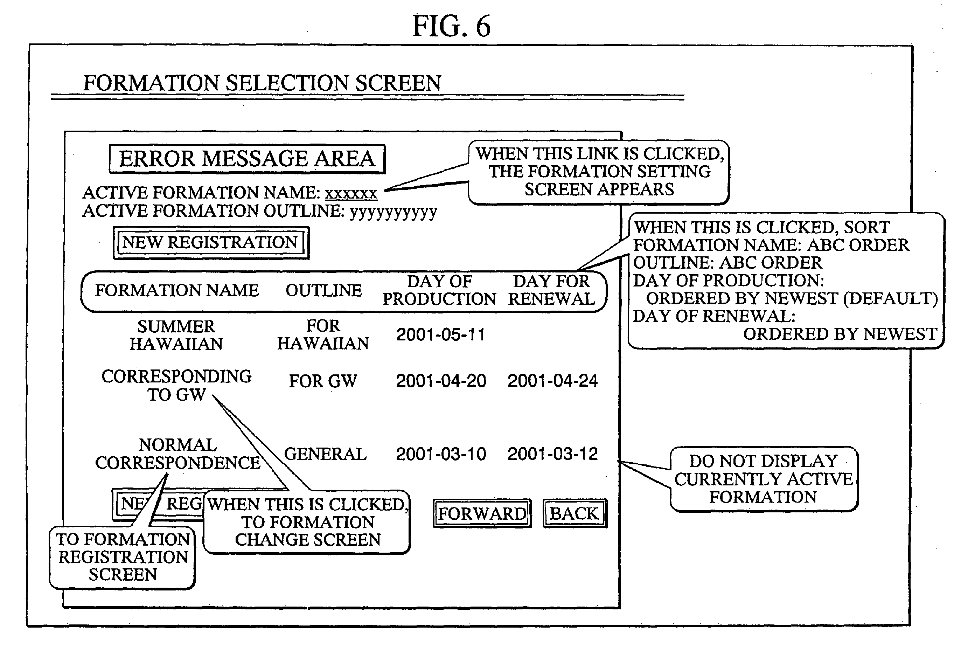

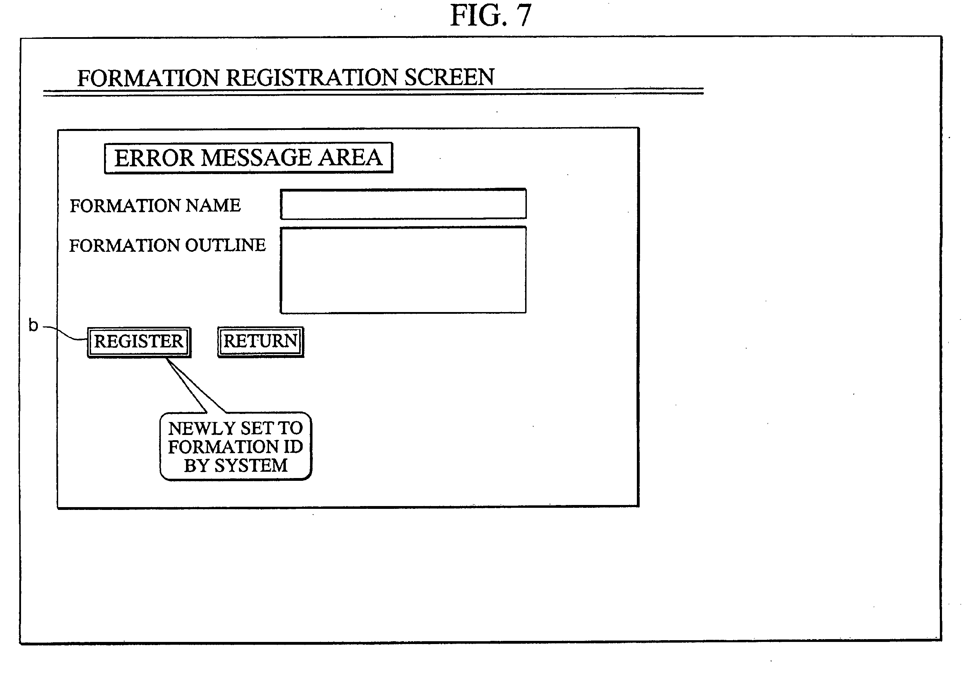

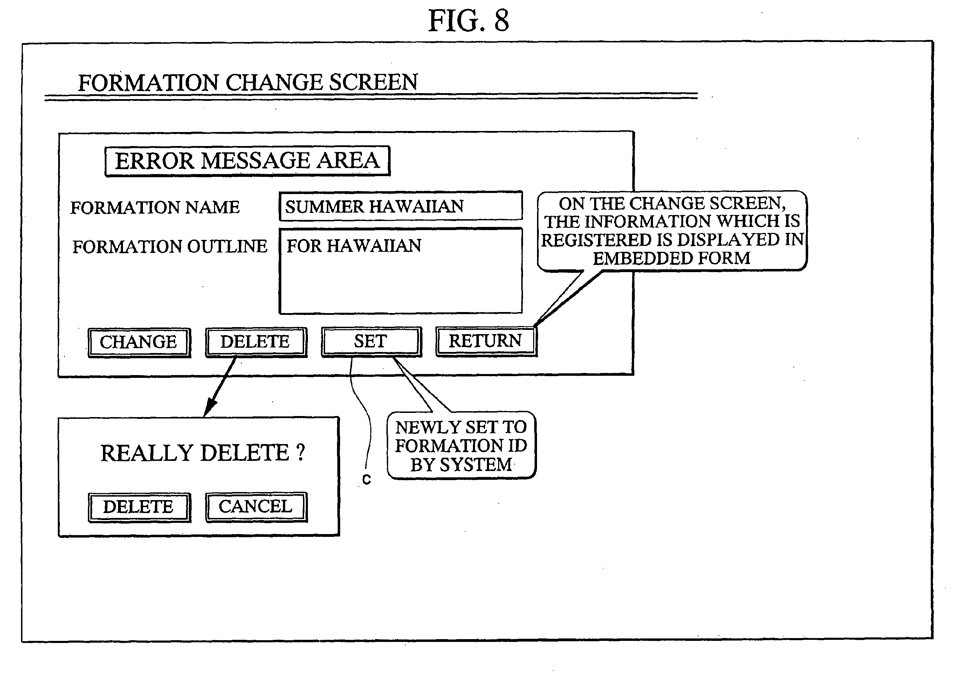

First, when a command for setting the formation is inputted, a formation selection screen like the one shown in FIG. 6 is displayed upon the display screen of the display device which has been connected to the information distribution server 1. And, when the new registration button shown by the reference symbol a is clicked in order to set the formation anew, the screen changes over to the formation registration screen shown in FIG. 7. And, after a formation name for the new registration and an outline of the formation have been inputted, when the registration button (the reference symbol b) is clicked, the screen changes over to the check screen shown in FIG. 8.

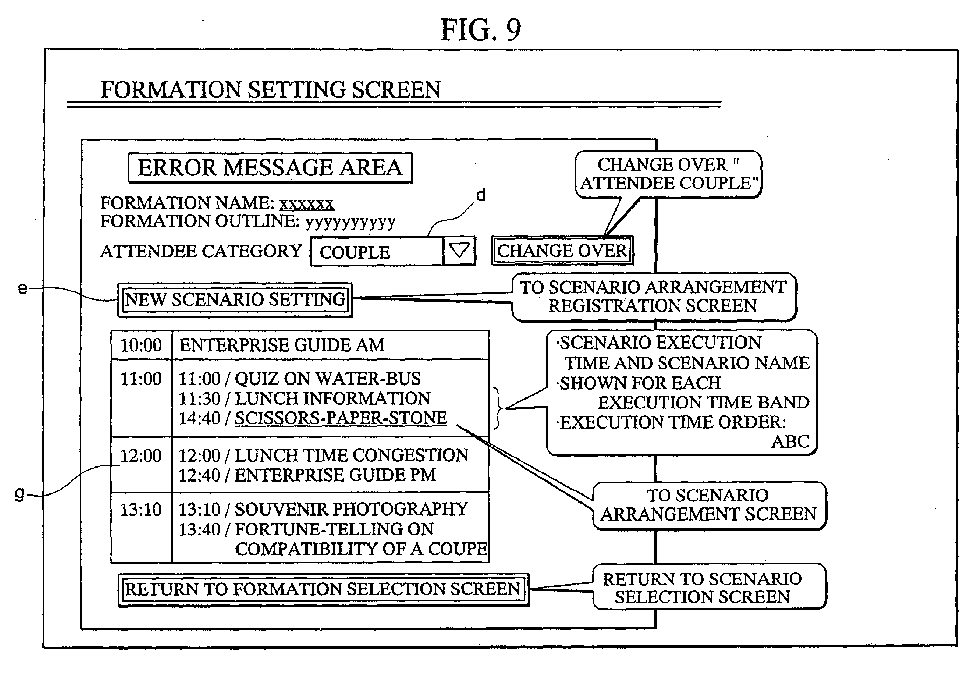

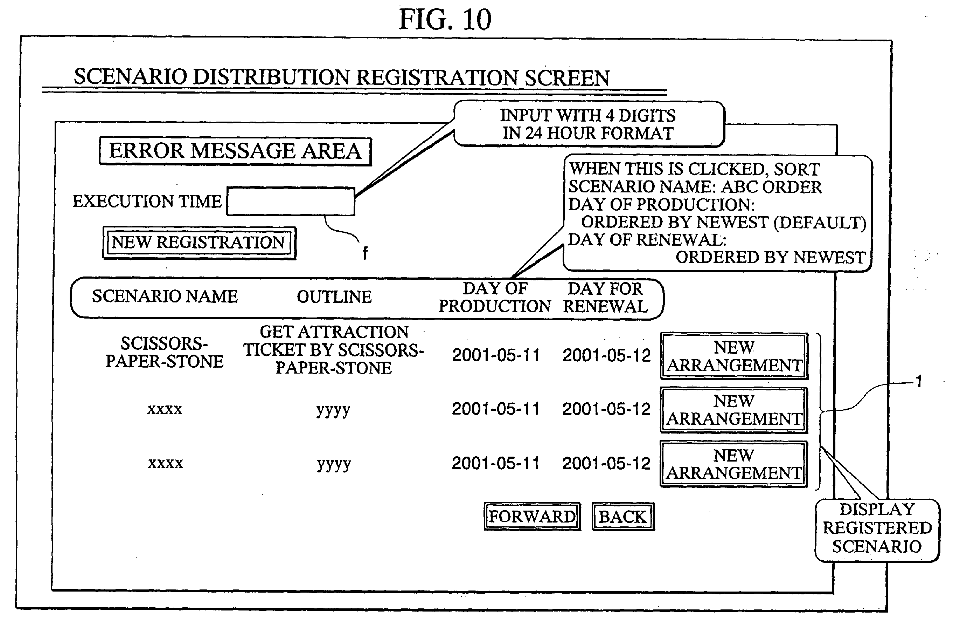

And, after the contents of the input have been checked, when the set button (the reference symbol c) is clicked, the screen changes over to the screen shown in FIG. 9. Here, the property information is set for designating the category information of the person who is visiting who is the object for distribution of the information for distribution. The setting of this property information designates the category of the attendee from the pull down menu which is shown by the reference symbol d. After the attendee category, which is the property information, has been set, when the new distribution button for the scenario shown by the reference symbol e is clicked, the screen shown in FIG. 10 is displayed as a pop-up screen. And, after an execution time has been inputted in the execution time input field which is shown by the reference symbol f, when that new distribution button designated by the reference symbol 1 which is lined up with the scenario name of the information for distribution is clicked, the execution time which has been inputted in the execution time input field which is designated by the reference symbol f is set as a formation for the information for distribution which has been clicked. And the scenario in which the execution time has been set is, for example, registered in the check table shown by the reference symbol g in FIG. 9.

By doing this, the formation is set.

It should be understood that, in this setting of the formation, not only is the same information for distribution dispatched to persons who visit for whom the same category information is registered, but also it is acceptable to distribute information for distribution of different enterprises. It is possible to divide up the persons who visit by the enterprise which they patronize, so that it is possible to eliminate confusion by collecting together the persons who visit a single enterprise.

Next, a checking procedure for checking the state of the screen of the portable telephone device 3 when the information for distribution of a formation which has been set has been distributed will be explained with reference to the figures.

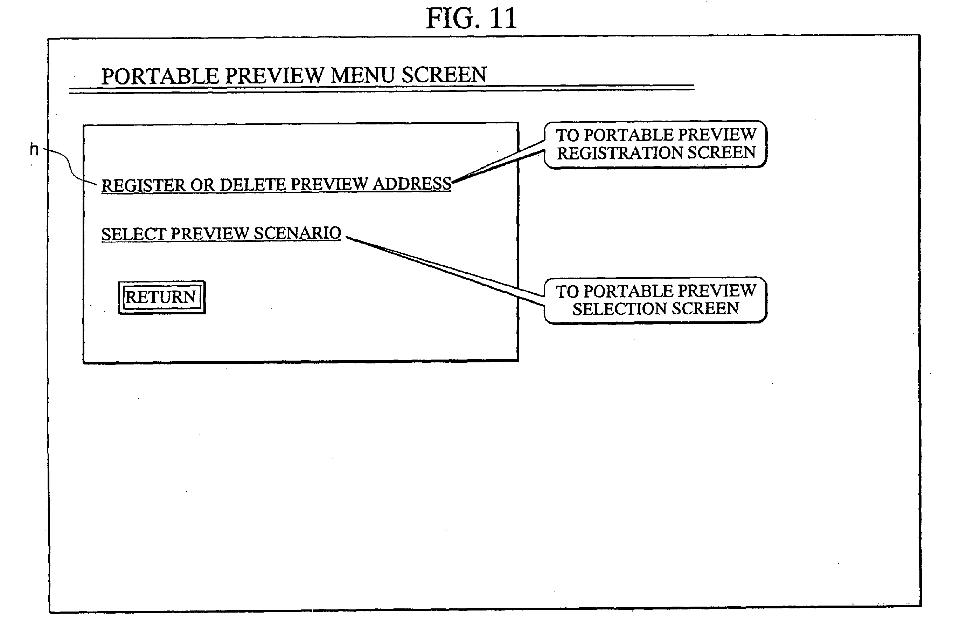

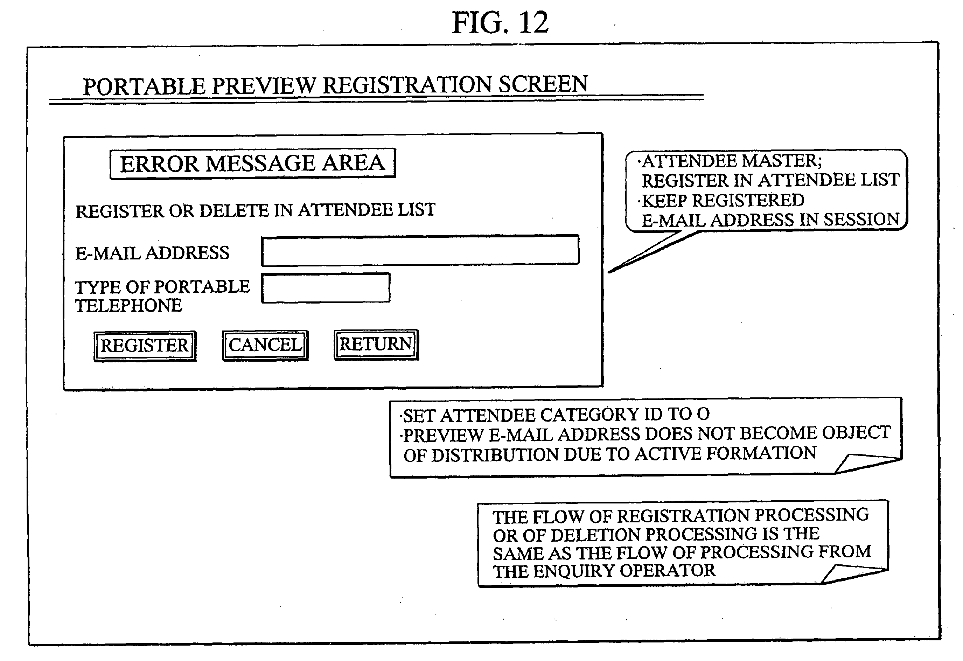

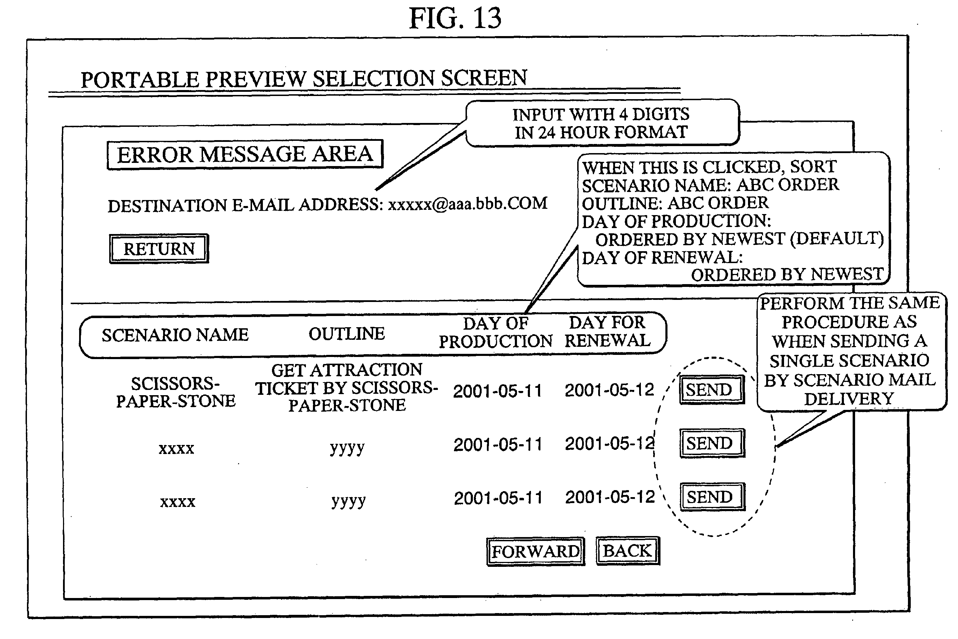

First, when a preview request is inputted for performing the checking procedure, a screen like the one shown in FIG. 11 is displayed. And, when the button "register or delete preview address" which is shown by the reference symbol h is clicked from this screen, the screen shown in FIG. 12 is displayed. Here, along with an electronic mail address which is the signal destination information of the portable telephone device being inputted for preview in the e-mail address field, a device type name which is the device type information is inputted in a portable telephone device type field, and, when the registration button is clicked, the screen shown in FIG. 13 is displayed.

In FIG. 13, when the dispatch button (the reference symbol i) of that formation, among the formations which are currently registered, which is to be the object of checking is clicked, the information for distribution is immediately dispatched to the electronic mail address of the signal destination information which has been registered with FIG. 12.

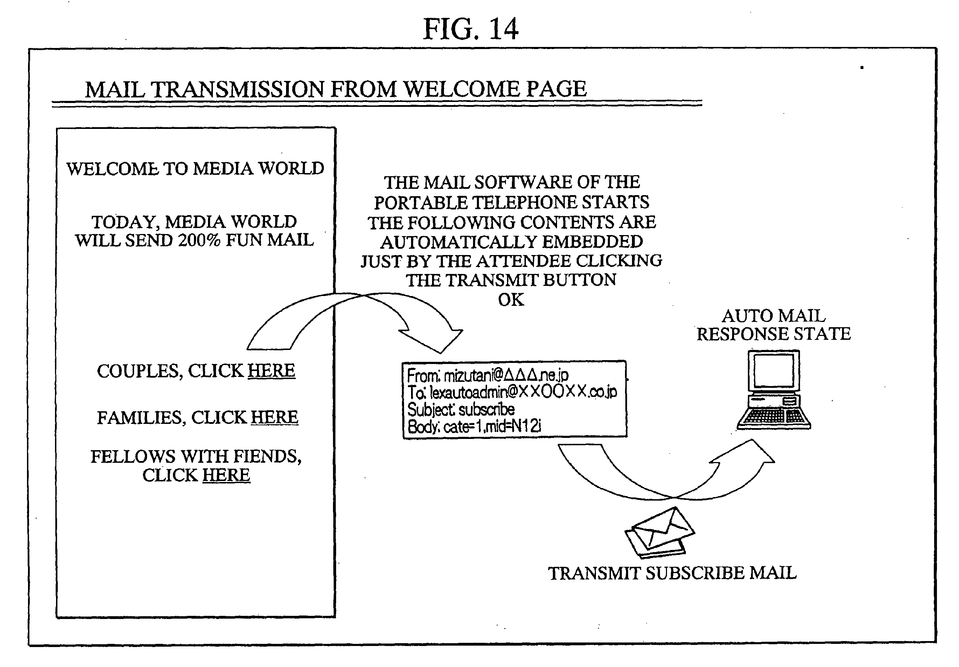

Next, the information which is dispatched to the information distribution server 1 from the portable telephone device 3 when dispatching mail from the welcome page will be explained while using FIG. 14.

After the welcome page has been displayed upon the portable telephone device 3 as shown by the reference symbol j in FIG. 14, when the applicable category is clicked by the person visiting, the registration information shown by the reference symbol k is dispatched to the information distribution server 1. The electronic mail address among this data which is designated by the reference symbol k, which is the signal destination information of the portable telephone device 3, is set as the "from" data, and it is dispatched to the address of the information distribution server 1 of "to", which specifies the signal destination. In this case, the category information which has been selected by the person visiting is set as "CATE=1". Here, 1 is the information which specifies the category; for example, corresponding to "couple".

Furthermore, "mid=N12i" is set, which corresponds to the device type information. Here, n=12i corresponds to the device type name of the portable telephone device 3. These various items of information are read out by the automatic site access device 3a, and are dispatched to the information distribution server 1 by the portable telephone device 3.

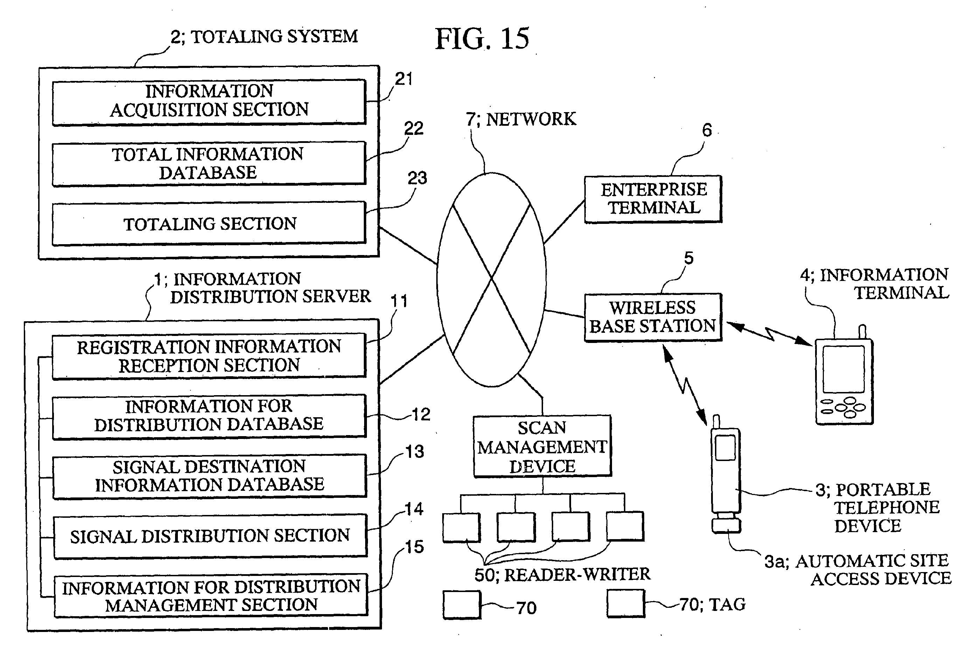

Next, an information distribution system according to a second embodiment will be explained. FIG. 15 is a schematic block diagram showing the structure of this information distribution system according to the second embodiment. In this figure, the same reference symbols are affixed to parts which correspond to parts in FIG. 1, and the portions whose functions differ from FIG. 1 will be explained.

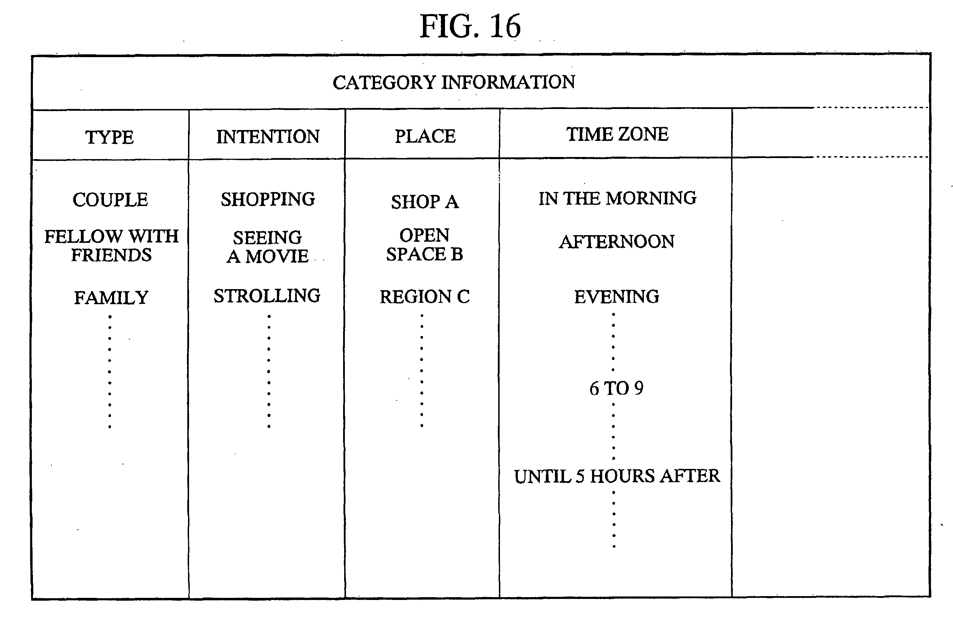

The category information which the registration information reception section 11 receives, as shown in FIG. 16, includes a property which specifies a property of the person who is visiting, an intention which specifies an intention in visiting the enterprise of the person who is visiting, a place which specifies the roaming destination of the person who is visiting, a time zone which specifies the time zone in which the person who is visiting is roaming, and the like, and this category information is stored in the signal destination database 13. It should be understood that here the term "property" corresponds to the property information of the first embodiment.

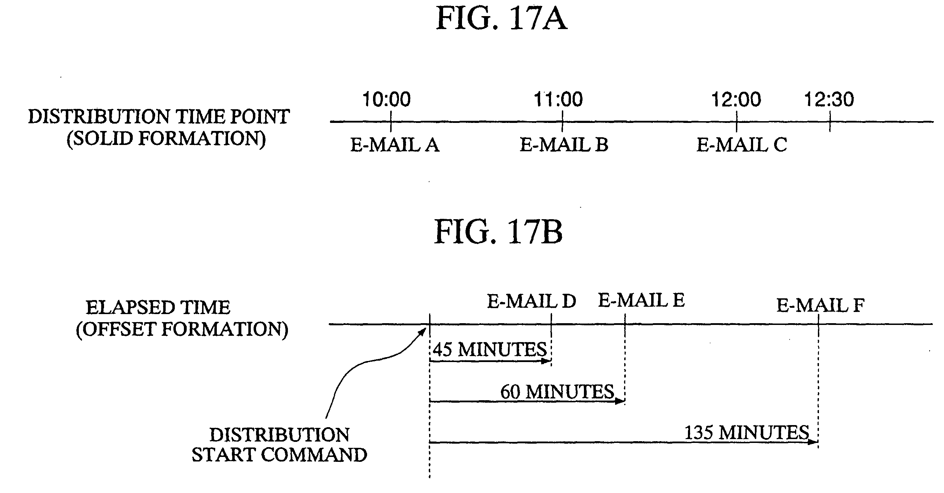

Along with the information for distribution database 12 storing the information for distribution for which a time for distribution has been set in advance, it also stores information for distribution for which a time has been set in advance as a time for distribution when it should be distributed, based upon the passage of time from the start of distribution to the portable terminal of information for distribution. This information distribution will now be explained in detail using FIG. 17A and FIG. 17B. As shown in this figure, while, for the information for distribution in the first embodiment, as shown in FIG. 17A, a distribution time point is set so that it is dispatched at a time instant which is set in advance (in the following, this will be termed a "solid formation"), on the other hand, in this embodiment, as shown in FIG. 17B, a time period from the start of information distribution to the portable terminal which has been registered until the information for distribution is to be distributed is set in the information for distribution as an offset time period (in the following, this will be termed an "offset formation"). Here, as an example, information for distribution (electronic mails D through F) are shown in which the offset time periods of 45 minutes, 60 minutes, and 135 minutes have been set. It should be understood that this start of distribution of information may be later than when the signal destination information of the portable terminal has been registered upon the information distribution server 1; for example, the information distribution server may determine upon a timing for the start of information distribution based upon the time point at which the signal destination information has been registered upon the information distribution server 1, or it may determine upon a timing for the start of information distribution based upon a dispatch start command which is dispatched from the portable terminal.

Furthermore, in the information for distribution which has been stored in the information for distribution database 12, apart from the offset time period, distribution category information is set in advance which specifies the category (corresponding to the above described "classification") of the object for distribution. This distribution category information, for example, may include property, intention, place, time zone, etc..

When distributing the information for distribution, based upon the category information which is included in the registration information, the signal distribution section 14 distributes the information for distribution to the portable terminal for which has been set signal destination information for which is set category information which corresponds to the distribution category information which has been set in the information for distribution.

Furthermore, the signal distribution section 14 distributes the information for distribution to the portable terminal for which the signal destination information which is included in the registration information is set, based upon the offset time period which is set in the information for distribution which has been stored in the information for distribution database 12, and upon the passage of time from the distribution start command of the information for distribution for the portable terminal. In other words, the signal distribution section 14 distributes the information for distribution to the portable terminal which has signal distribution information for which the passage of time and the offset time period agree with one another, and also for which the category information and the distribution category information agree with one another.

A tag 70 is an IC tag, and it may be of a non contact type, of a contact type, or of a hybrid type. For example, this tag 70 may be a RFID (Radio Frequency Identification Tag), and, along with storing the ID of the person who is visiting, which is information for discriminating the person who is visiting, it performs communication with a reader-writer 50, and, along with dispatching the ID of the person who is visiting to the reader-writer 50, it stores a reader-writer ID of the reader-writer 50 which is dispatched from the reader-writer 50. The storing of this reader-writer ID is performed every time communication is performed with the reader-writer 50. This tag 70 is issued to a person who is visiting who attends within the compound business facility, and it is carried by the person who is visiting. This tag 70, for example, may be attached to the portable terminal, or to a medium such as an entry ticket or the like for entering the compound business facility. It should be understood that a plurality of the reader-writers 50 are provided, and an individual reader-writer ID is appended to each of the reader-writers 50. This reader-writer ID is dispatched from a scanner management device 51 to the information distribution server 1 as a position ID. By utilizing this position ID, it is possible to specify the place at which the user is utilizing the tag and is performing communication with the reader-writer 50.

Furthermore, this position ID is information for discriminating between the reader-writers 50, and it is possible to discriminate and to apprehend the position of each reader-writer 50 which has been provided within the compound business facility, according to this reader-writer ID. Due to this, it is possible to apprehend the positions of persons who visit by apprehending the position ID of the reader-writer 50 which has detected the tag ID of the tag 70.

The reader-writer 50 is provided within a working area, and it obtains the ID of the persons who visit by performing communication with the tags 70 which have approached the region in which communication is possible, and it dispatches the ID of the persons who are visiting which it has obtained and the reader-writer ID which has been set to itself as position information to the scanner management device 51.

The scanner management device 51 is connected to each of the reader-writers 50, and it dispatches the position information which is dispatched from the reader-writers 50 to the information distribution server 1 via the network 7.

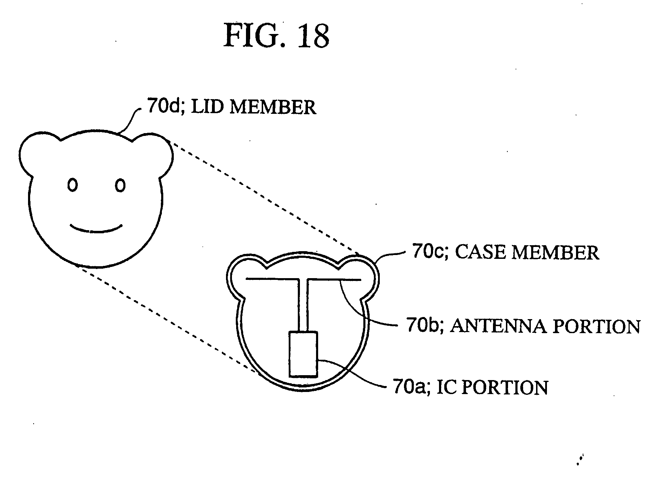

Furthermore the reader/writer 50, apart from reading in the ID of the person who is visiting from the tag 70, also dispatches data to the tag 70 and stores it in the tag 70. It should be understood that a device other than the reader-writer 50 may be utilized, provided that it can read in the ID of the person who is visiting from the tag 70. Furthermore, it is acceptable to utilize some device other than the reader-writer 50, provided that it is endowed with the function of reading in the ID of the person who is visiting from the tag 70, and of dispatching data to the tag 70 and storing it in the tag 70. Yet further, it would also be acceptable to provide the tag 70 inside a chip case in the form of a character, such as the one shown in FIG. 18, so that it could be carried by the user as a key holder or on a strap of a portable terminal. In this case, an IC portion 70a and an antenna portion 70b of the tag 70 are mold processed and fixed by resin within a case member 70c, and the case member 70c and a lid member 70d are attached together.

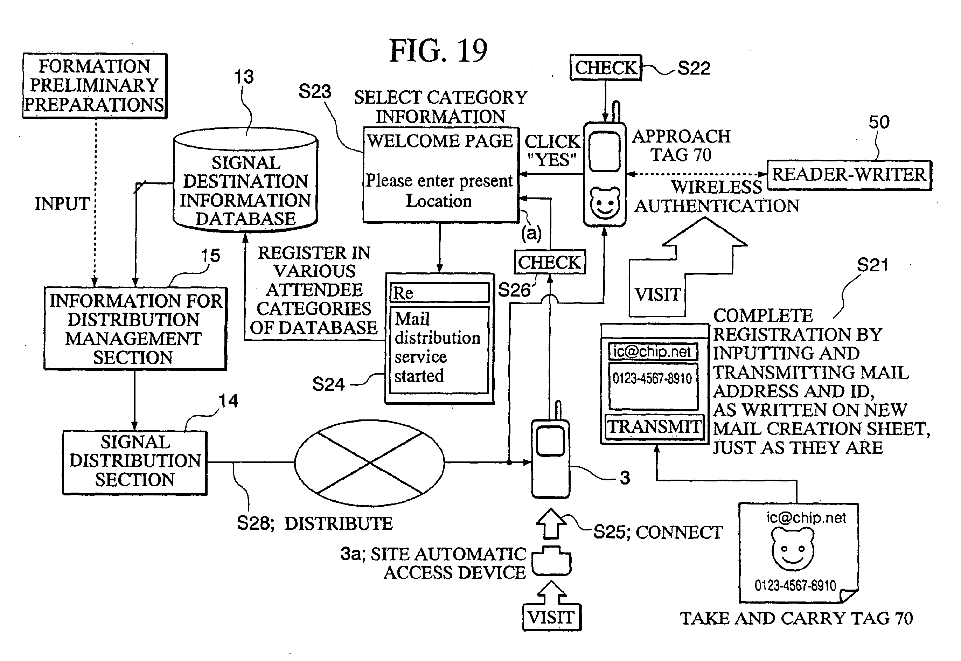

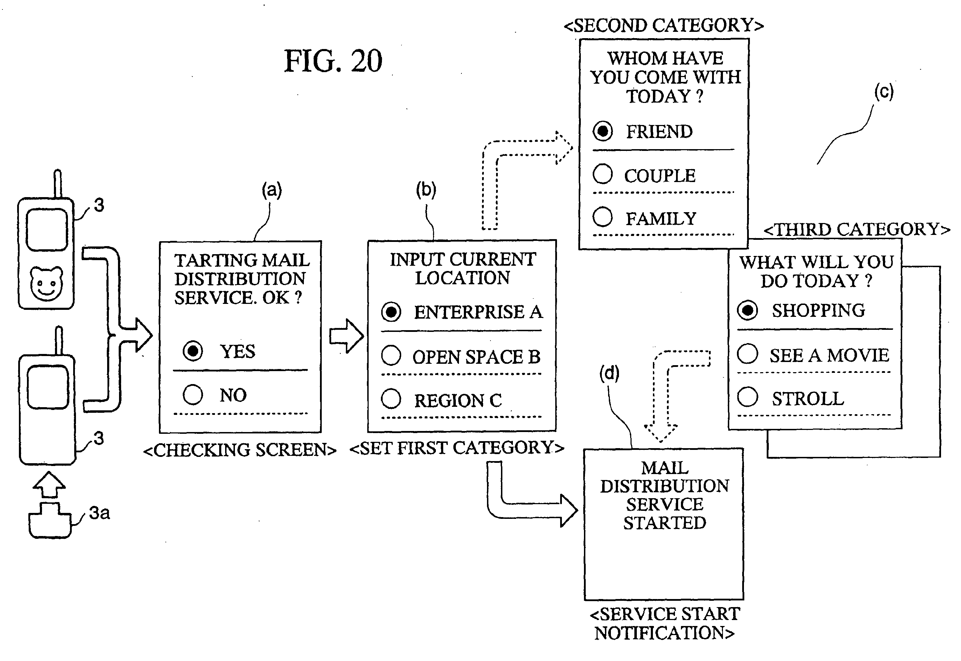

Next, the procedure for distributing information for distribution of this information distribution system of this embodiment will be explained using FIG. 19 and FIG. 20. FIG. 19 is a flow chart for explanation of the procedure for distributing the information for distribution, and FIG. 20 is a figure for explanation of the change over of the display screen of the portable telephone device 3. Here, distribution preparation of the information for distribution which has been entrusted for distribution from each enterprise within the compound business facility is performed in advance by an active formation function of the information for distribution management section 15, based upon the distribution time point and the time for distribution which have been ordered, and upon category information which specifies the object of distribution, and then this information is stored in the distribution DB 12.

If attendance registration is performed using the tag 70, the person who is visiting takes and carries the tag 70 which is distributed or sold at the periphery of the compound business facility. This tag 70 is mounted upon a frame upon which is written an electronic mail address for registration of the signal destination information of the portable terminal to the information distribution server 1, and the ID of the person who is visiting. And the person who is visiting dispatches the ID of the person who is visiting to the electronic mail address which is written upon the frame with the portable telephone device 3, and performs an attendance registration request. By doing this, the registration is performed by establishing a correspondence between the signal destination information and the ID of the person who is visiting within the information distribution server 1 (the step S21 of FIG. 19). And, after the signal destination information has been registered, the tag 70 is carried by the person who is visiting by being stuck to the front surface or to the rear surface of the portable telephone device 3 by the person who is visiting.

And if the person who is visiting goes to a location within the compound business facility and wants information related to the compound business facility, he brings the portable telephone device 3 to which the tag 70 is stuck to within the communication region of the reader-writer 50. The reader-writer 50 performs communication with the tag 70 which has been brought near to within the region in which communication is possible and performs authentication processing, and, when the authentication has been completed, it obtains the ID of the person who is visiting from the tag 70, establishes a correspondence between the ID of the person who is visiting which has been obtained and the reader-writer ID which has been set in itself, and dispatches this via the scanner management device 51 and the network 7 to the information distribution server 1 as position information.

When the position information is dispatched, the registration information reception section 11 of the information distribution server 1 reads out the signal destination information which corresponds to the ID of the person who is visiting from the signal destination information DB 13, based upon the ID of the person who is visiting which is included in the position information. When the signal destination information is read out, the signal distribution section 14 dispatches contents for checking whether or not to start an information distribution service such as that shown by the reference symbol (a) in FIG. 20 to the terminal of the signal destination information which has been read out (in the step S22 of FIG. 19). And when "YES" is clicked by the user and an order is issued from the portable telephone device 3 for the start of information distribution, the signal distribution section 14 dispatches contents for setting the category information, as shown by the reference symbol (b) in FIG. 20 (in the step S23 of FIG. 19, and as per the reference symbol (b) in FIG. 20). At this time the category information may set a plurality of category information such as first category, second category...., as shown by the reference symbols (b) and (c) in FIG. 20. In this case, a correspondence is also established for the category information with regard to the information for distribution, and a plurality of items of distribution category information are set in advance.

And the category information is selected by the user, and, when the category information which has been selected from the portable telephone device 3 is dispatched, the signal distribution section 14 dispatches the contents of the service start check as shown by the reference symbol (d) in FIG. 20 (the step S24 of FIG. 19).

When performing attendance registration using the automatic site access device 3a, the person who is visiting carries the automatic access device 3a, and connects it to the data communication terminal of the portable telephone device 3 (in the step S25 of FIG. 19). And, after having accessed the welcome page, attendance registration is performed. Here, a check for the start of the mail distribution service is performed (in the step S26 of FIG. 19, and as shown by the reference symbol (a) in FIG. 20), and, after setting of the category information has been performed (in the step S23 of FIG. 19, and as shown by the reference symbol (b) in FIG. 20), the operation of the mail software of the automatic site access device 3a is started, the signal destination information of the electronic mail address and the device type information are dispatched from the portable telephone device 3 to the information distribution server 1 as reply information (for example, as mail), and are registered in the signal destination DB 13 as registration information (in the steps S23 and S24 of FIG. 19). And the contents of a service start check as shown by the reference symbol (d) in FIG. 20 are dispatched to the portable telephone device 3.

By performing this procedure for attendance registraction, the signal destination information is registered in the signal destination DB 13 (in the step S27 of FIG. 19). And the signal distribution section 14 dispatches the information for distribution for which the category information, the distribution time point, and the time for distribution have been set in advance by the information for distribution management section 15 as electronic mail to the electronic mail address which is the signal destination information which has been stored in the signal destination DB 13, according to its automatic distribution function (in the step S28 of FIG. 19). By doing this, the distribution destination information is distributed as electronic mail according to the category information of the person who is visiting, based upon the passage of time from the time point which has been commanded or the time point at which the registration has been received and the category information.

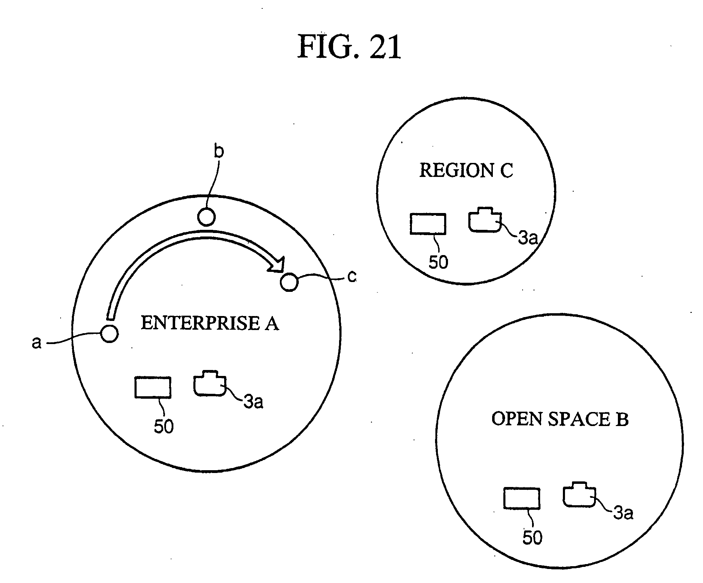

Next, the distribution of electronic mail in the step S28 of FIG. 19 will be explained in detail using the figures. A) With regard to the category information "place", at the reference symbol (b) in FIG. 20, if category information about a place is set, the roaming range is determined in advance according to the contents of the information for distribution, and, within this roaming range, the information for distribution is distributed based upon the distribution time point, for a solid formation, and upon the time for distribution, for an offset formation. The roaming range, for example, as shown in FIG. 21, if three types of place "enterprise A", "open space B", and "region C" are determined upon, is determined by the user from among these three types, as shown by the reference symbol (b) in FIG. 20. It should be understood that it may also be the case that the category information of "place" need not be selected by the user. For example, as shown in FIG. 21, an automatic site access device 3a may be set up within each roaming range for distributing information for distribution which has been endowed with a function of dispatching place discrimination information for specifying this roaming range. And, if the user desires information for distribution related to this place, he goes to that place, connects the automatic site access device 3a to the portable telephone device 3, and performs attendance registration for information distribution. By doing this, the place discrimination information is notified to the information distribution server 1, and category information for the place is determined. Furthermore, in the same manner for the reader-writer 50, it is also possible to determine category information for the place by dispatching the position information to the information distribution server 1.

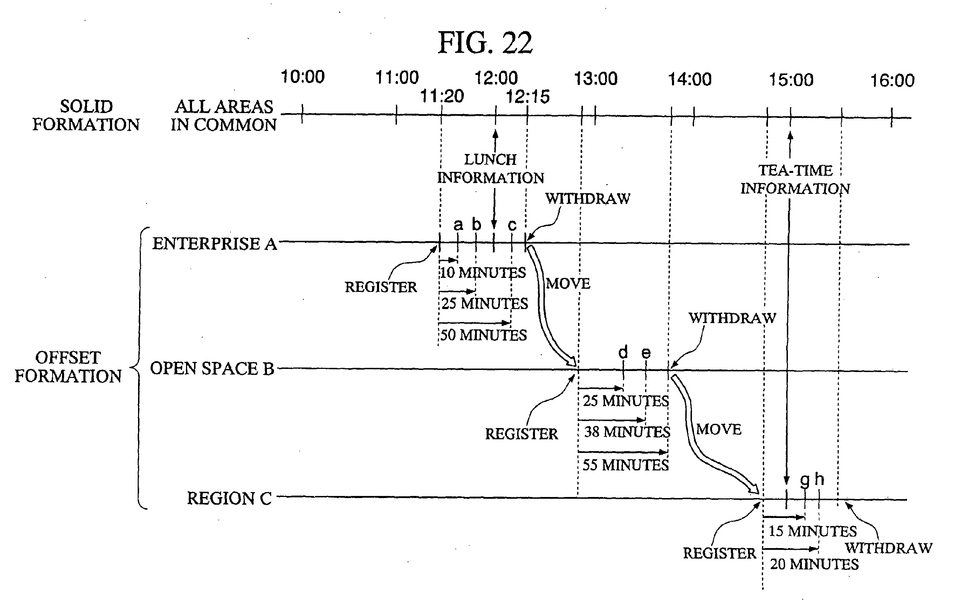

Next, using FIG. 22, the case will be explained in which, after the category information has been set to "place", electronic mail is dispatched to the portable telephone device 3. By the user bringing the portable telephone device 3 to which the tag 70 has been affixed near to the reader-writer 50 which is provided within the enterprise A at 11:20, his attendance registration is performed, and, when the distribution of the information for distribution has been started, the items of information for distribution which have been set for each of the distribution times 10 minutes, 25 minutes, and 50 minutes are respectively, according to the passage of time, distributed 10 minutes after, 25 minutes after, and 50 minutes after the time point of attendance registration (as shown by the reference symbols a, b, c, and d in FIG. 22). Furthermore, the lunch information for which the distribution time point is set by the fixed formation (solid formation) to 12:00 is dispatched to the portable telephone device 3 at 12:00, rather than according to the passage of time from the start of information distribution to the portable telephone device 3. And, when the withdrawal time period which is set in advance by the offset formation arrives, the signal destination information of the user is cancelled, and is withdrawn. It should be understood that here, by "withdrawal", is meant that the signal destination information for the portable terminal is deleted from the signal destination information database 13. This withdrawal time period may be set in advance; or, alternatively, it may be arranged to withdraw at the time point when the final item of information for distribution has been set by the offset formation. Furthermore, before this withdrawal, it will also be acceptable for a registration at a "place" which has already been registered to be withdrawn, by the person who is visiting performing a new registration at another place. It is possible to distribute information exactly matched to each region by performing this withdrawal procedure. It should be understood that, for the categories which will be explained below as well, the withdrawal procedure is performed in the same manner at the time point that the withdrawal time period is reached, at the time point that the final item of information for distribution has been distributed, at the time point that a new registration has been performed, or the like.

And, after the person who is visiting has shifted to the open space B, when attendance registration at the open space B is performed, information for distribution for roaming within the open space B is distributed according to the passage of time (as shown by the reference symbols d, e, and f in FIG. 22). Furthermore, when the person who is visiting shifts to the region C and performs attendance registration, the information for distribution related to the region C is dispatched according to the passage of time from the attendance registration (as shown by the reference symbols g and h in FIG. 22). Here, tea-time information which has been set to 15:00 with a solid formation is dispatched to the portable telephone device 3 at 15:00, without any relationship to elapsed time. It should be understood that the information for distribution which has been set with a solid formation is dispatched in common to all of the portable terminals for which attendance registration is performed, without any dependence upon the category information of place. However, if a portable terminal is not registered as attending at the distribution time point, it cannot receive information for distribution which depends upon a solid formation.

For a case in which "place" is set as this category information, the distribution time point of the information for distribution is set in consideration of the time period for remaining in the intended place within roaming range and the time period for shifting between the intended places. For example, in a case in which the general goods shops a, b, and c of FIG. 21 are present, it is set in consideration of the time period to choose goods within each general goods shop, and the time period for shifting between the general goods shops. By doing this, the person who is visiting is able to roam at high efficiency within the roaming range, according to the information for distribution. Due to this, it is possible for him to enjoy himself while making good use of his free time in an efficient manner. Furthermore, since the traders of the compound business facility are able to provide roaming within the facility by the persons who are visiting without any trouble, thereby they are able to provide a facility of which the amusement level has been enhanced, and it becomes possible to impart the impression of wishing to come to the facility again.

### (B) About the category information "property"

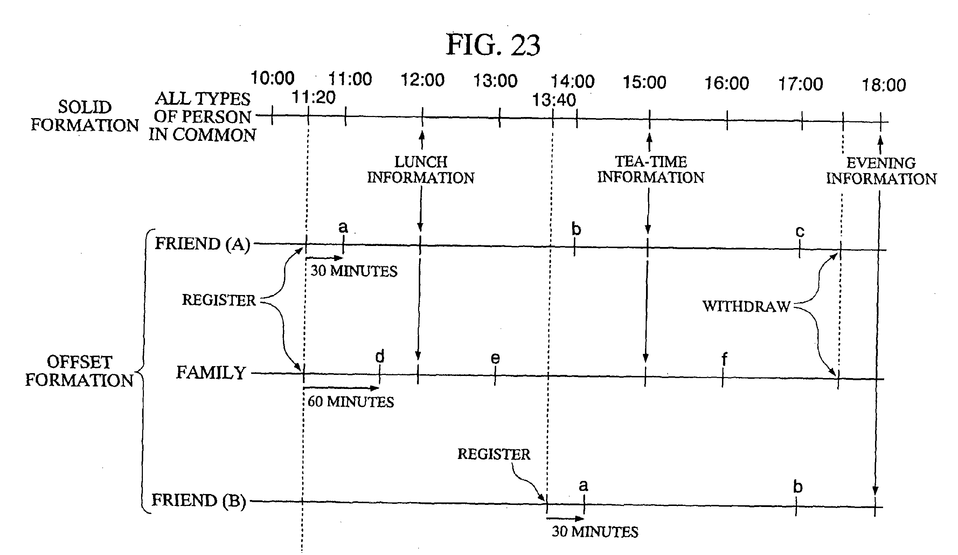

Next, in the setting of the first category of the reference symbol (b) in FIG. 20, the case in which "property" is set as the category information will be explained using FIG. 23. When a portable terminal for which "fellow with friends" is set for "property" and a portable terminal for which "family" is set enter within the same compound business facility, and attendance registration is performed at the same time using the tag 70 or the automatic site access device 3a, then information for distribution for roaming attractions or general goods shops is distributed according to the passage of time to the portable terminal for which "fellow with friends" has been set (as shown by the reference symbols a, b, and c in FIG. 23). On the other hand, information related to a newly established park, or sale information for toys, is distributed according to the passage of time to the portable terminal for which "family" has been set, at a different timing to that for the portable terminal for which "fellow with friends" has been set.

Here, although the information for distribution which has been set by an offset formation is distributed to the portable terminal for which "fellow with friends" has been set and to the portable terminal for which "family" has been set at different time instants, the information for distribution which has been set by a solid formation is distributed at the same time instant.

In this manner, by setting property in the category information, it is possible for roaming within the facility to be experienced according to the preferences or the tastes of the person who is visiting.

### (C) About the category information "intention"

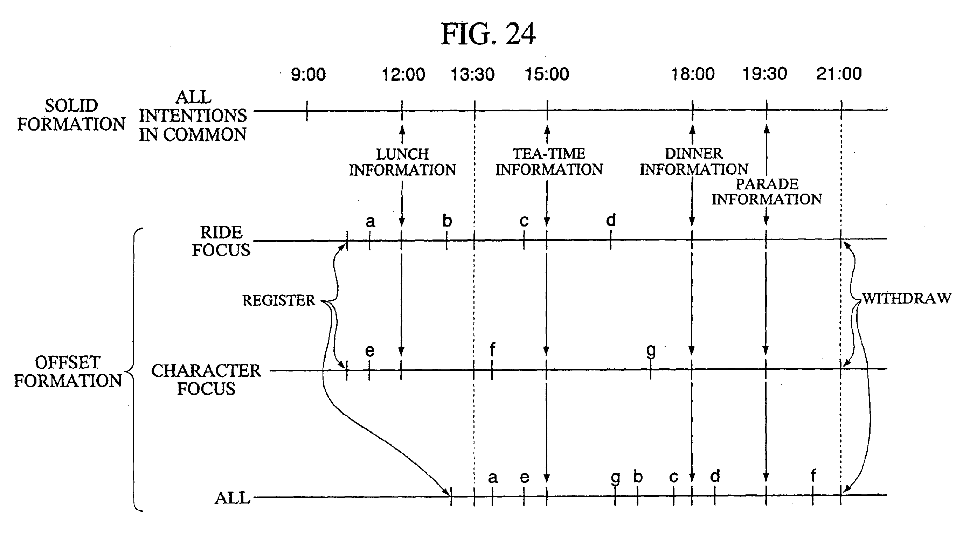

Next, in the setting of the first category of the reference symbol (b) in FIG. 20, the distribution of the information for distribution in the case in which "intention" is set as the category information will be explained using FIG. 24. When a portable terminal for which "ride focus" has been set for "intention" and a portable terminal for which "character focus" has been set enter within the same amusement park and perform attendance registration, information for distribution in which riding on a jet coaster or a Ferris wheel has been made the focus is distributed to the portable terminal for which "ride focus" has been set, and information for distribution which has been set based upon the time periods for riding upon the rides, or the time periods and the usual route for shifting between the various rides, is distributed according to the passage of time from the attendance registration (as shown by the reference symbols a, b, c, and d in FIG. 24). On the other hand, information related to character attractions, such as attractions in which characters perform dances or singing attractions in which characters sing or the like is distributed according to the passage of time to the portable terminal for which "character focus" has been set, at a different timing from that for the portable terminal for which "ride focus" has been set.

On the other hand, it will also be acceptable to provide category information of "all" which supposes that all the attractions within the amusement part are to be seen in order. In this case, the information for distribution for making a round at high efficiency within the precincts of the amusement park is set by utilizing an offset formation. It should be understood that, at this time, a registration reception period is provided in which it is possible to set the category information of "all", based upon the time period which is required for making a tour of all the attractions.

Here, although the information for distribution which has been set according to an offset formation is distributed to the portable terminals for which "ride focus" has been set and to the portable terminals for which "character focus" has been set at different time instants, the information for distribution which has been set according to a solid formation is distributed at the same time instant.

In this manner, by setting an intention in the category information, it is possible to offer a roaming route aimed at fulfilling the intentions of the person who is visiting who is attending the facility, and it becomes possible for a person who is visiting to fulfill his intentions without planning any roaming route by himself. Due to this, it is possible for a trader of the compound business facility to enhance the level of fun for the persons who are visiting.

### (D) About the category information "time zone"

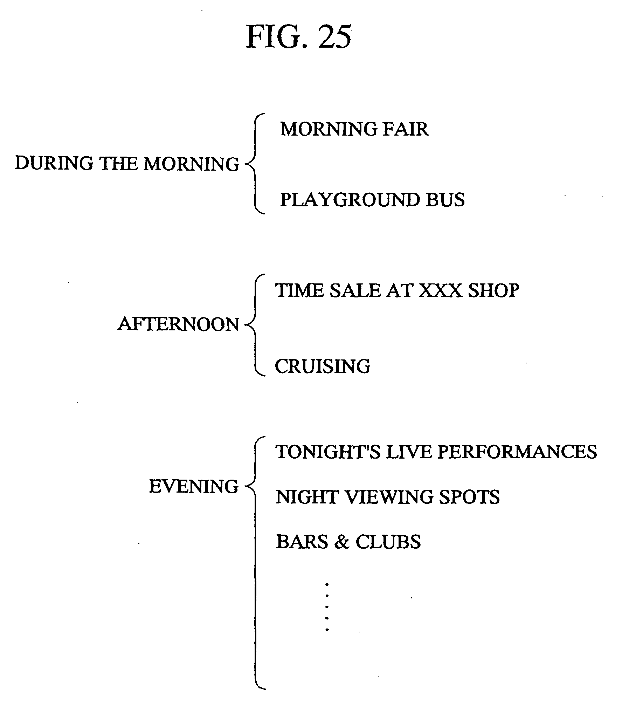

Next, in the setting of the first category of the reference symbol (b) in FIG. 20, the case in which "time zone" is set as the category information will be explained using FIG. 25. FIG. 25 is a figure for explanation of information which is distributed by the category "time zone". As shown in this figure, if the category information is "time zone", information regarding services which can be received within this compound business facility for each time zone is included in the information for distribution. And, for example, if a person who is visiting attends within the compound business facility during the daytime, and if he wants information related to business during the night-time within this compound business facility, then a request for information is dispatched to the information distribution server 1 designating "night-time" as "time zone" in the category information. By doing this, information related to services which can be received during the night-time, such as "tonight's live performances", "night viewing spots", "bars and clubs" and the like is dispatched from the information distribution server 1 to the portable terminal which has performed dispatch of the request for information for distribution.

Here, if the category information has been set for "time zone", it is desirable for the information for distribution to be distributed according to an offset formation, and for the time for distribution to be set to "0 minutes". Since by doing this it is possible for the information which is deemed to be necessary to be quickly transmitted to a person who is visiting, it becomes possible for the person who is visiting to apprehend in advance the services that can be received in any time zone, and to plan the details of his roaming by himself in advance. Furthermore, at this time, it would also be acceptable to distribute information for distribution which has been set with a solid formation.

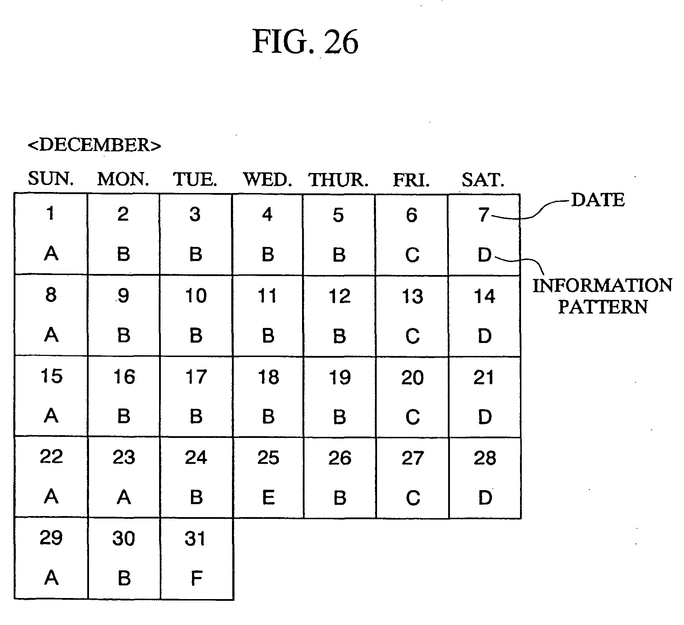

In the embodiment explained above, it would also be acceptable for it to be arranged to change the details of the information for distribution upon a specified day. For example, as shown in FIG. 26, an information pattern A could be set for Sunday, patterns B, C, and D could be set up for normal weekdays and for Friday and Saturday respectively, and information patterns E and F could be set up for days which are special such as Christmas or New Year's Eve or the like; and the information for distribution could be dispatched according to this information pattern.

It should be understood that, in the embodiment described above, it is possible to perform implementation by the method shown in the following, as a method for registering the signal destination information with the tag 70.

Registration sequence A. (a) The personnel hand over an attendance form to which the tag 70 has been adhered to the person who is visiting. (b) The person who is visiting writes down his electronic mail address, which is one type of signal destination information, and the device type name of his portable terminal, which is device type information, both of which are items for entry upon the attendance form, and hands it over to the personnel. (c) The personnel establish a correspondence between the tag ID of the tag 70 which was adhered to the attendance form and the electronic mail address and the device type name of the portable terminal which have been written upon the attendance form, input it from an input device (not shown in the figures), and register it in the signal destination DB 13. And the tag 70 is peeled away from the attendance form, and is handed to the relevant person who is visiting. This tag ID becomes the ID of the person who is visiting.

Registration sequence B. (a) The person who is visiting inputs his electronic mail address, which is one type of signal destination information of his own portable terminal, and the device type name of his portable terminal, which constitutes device type information, both of which are items for entry upon the attendance form, to a tag issuing device. (b) The tag issuing device temporarily stores the electronic mail address and the device type name which have been inputted, and ejects a tag 70, which it has been storing internally, through a delivery chute. (c) The person who is visiting receives the tag 70 which has been ejected through the delivery chute. (d) The tag issuing device takes the tag ID of the tag 70 which has been ejected as the ID of the person who is visiting, establishes a correspondence between it and the electronic mail address and the device type name which it has temporarily stored, and stores it in the signal destination DB 13.

It should be understood that, with the registration sequence B, it would also be acceptable to integrate the tag 70 which is issued with a site entry ticket for the facility. By doing this, it becomes possible for the person who is visiting to come into possession of the tag 70, without being aware of the existence of the tag 70.

It should be understood that it would also be acceptable to utilize the totaling system 2 of FIG. 1 in the information distribution system of FIG. 15.

Next, as a third embodiment, the case in which the information for distribution is set in the information distribution server 1 will be explained. It should be understood that, in order to set the information for distribution, "scenario creation" , "table creation", " formation creation", and "component creation" are performed. In the following, each of these will be explained in order.

### 1) Scenario creation

### a) About scenarios

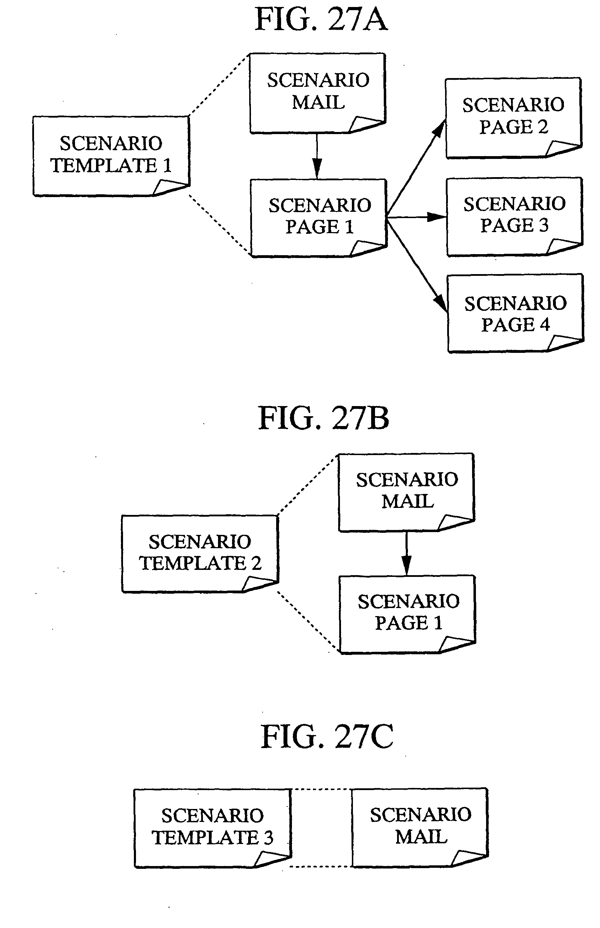

A scenario consists of scenario mail which a portable terminal of a person who is visiting receives, and a scenario page which can be read by clicking a link button which is provided within this scenario page. This scenario comprises at least one item of scenario mail, and, according to requirements, at least one scenario page is provided. When this scenario is to be created, for example, as shown in FIG. 27 A to C, it may be created by using a scenario template. In FIG. 27A, as scenario template 1, it is made up from one item of scenario mail, one scenario page 1 for which a relationship is established with this item of scenario mail, and three scenario pages for which a relationship is established with this scenario page 1. In FIG. 27B the case is shown in which scenario template 2 is made up from one item of scenario mail and one scenario page 1, while in FIG. 27C the case is shown in which scenario template 3 is made up from only one item of scenario mail.

### b) Creating a scenario

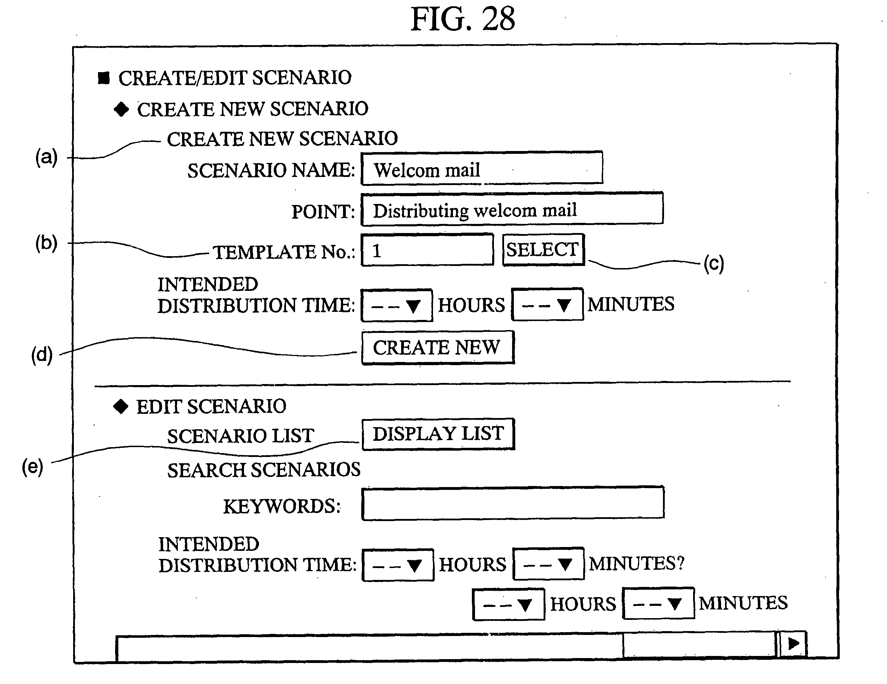

For creation of a scenario, upon the scenario creation and editing screen shown in FIG. 28, the scenario name is inputted in the scenario name input field shown by the reference symbol (a), the number of the scenario template is inputted in the field shown by the reference symbol (b), and the scenario is created by clicking the new creation button (the reference symbol (d)). Here, by clicking the scenario select button (the reference symbol (c)), it is possible to select and accept the number of a scenario template from among a list of scenario templates such as shown in FIG. 27 A to C.

### c) Inputting the scenario contents

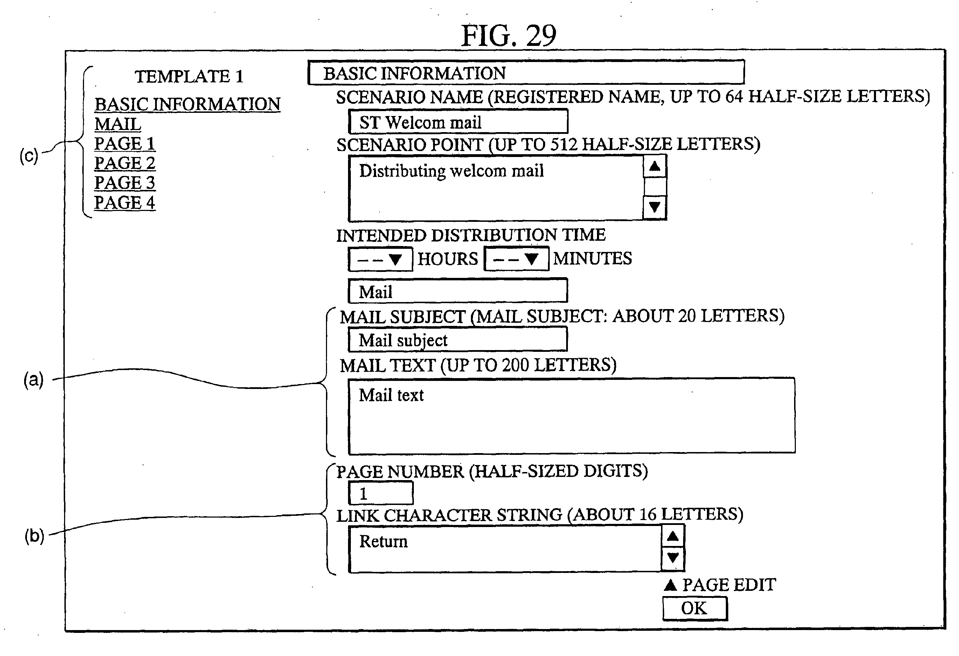

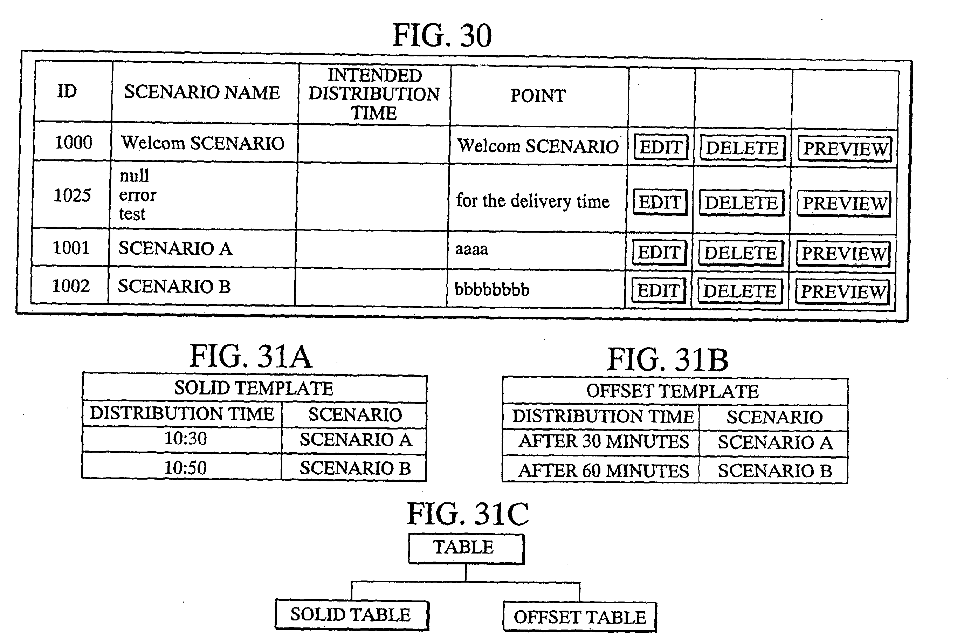

Next, a mail subject and a mail text are respectively inputted in a mail subject input field and a mail text input field shown by the reference symbol (a) on a mail text production screen shown in FIG. 29 for the scenario which has been created. Here, after having performed input of the scenario mail, the buttons shown by the reference symbol (c) are clicked, and the screen changes over to scenario page input screens, and a mail subject and a mail text are inputted for each scenario page as well. And an input field (the reference symbol (c)) is inputted for establishing a correspondence for linking the scenario mail and the scenario pages. After this inputting has been completed, the scenario ID is set by clicking the OK button, and the screen changes over to the scenario creation screen of FIG. 28. And, when the list display button (the reference symbol (e)) is clicked, as shown in FIG. 30, it is possible to check a list of the scenarios which have been created. Here, it is possible to delete a scenario with a delete button, to edit a scenario with an edit button, and, if a scenario has been dispatched to a portable terminal with a preview button, to perform checking of an image figure upon the screen.

### 2) Table creation

### a) About tables

After creating a scenario, creation of a table is performed. By "table" here is meant a minimum unit of distribution schedule which is arranged in time series. Furthermore, as shown in FIG. 31A to FIG. 31C, there are two types of table: a solid table FIG. 31A which is a table for distributing information for distribution according to a solid formation, and an offset table 31B which is a table for distributing information for distribution according to an offset formation FIG. 31C [sic]. One or more scenarios are included in this table.

### b) Creating a table.

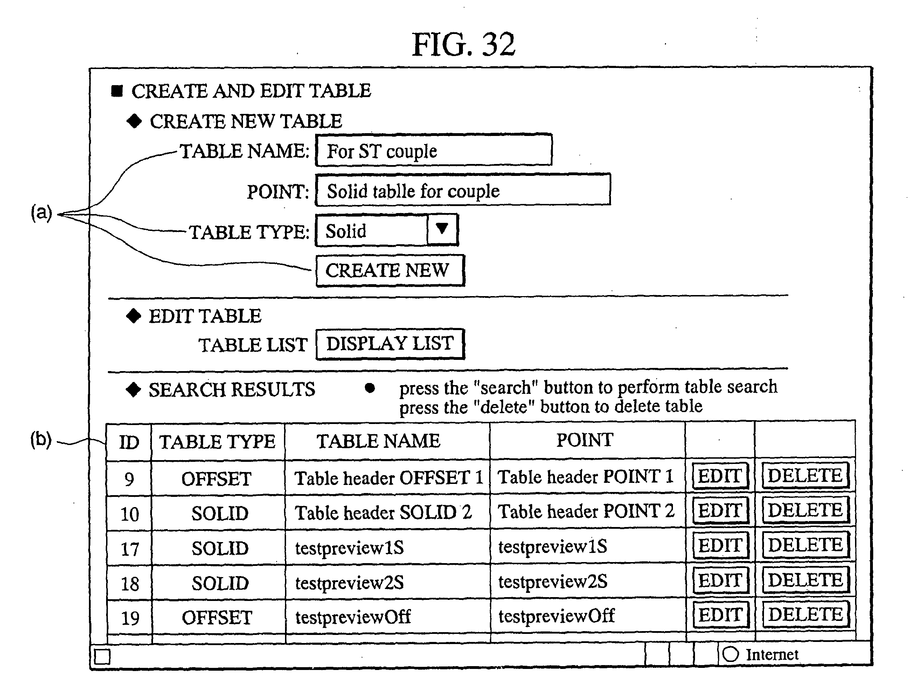

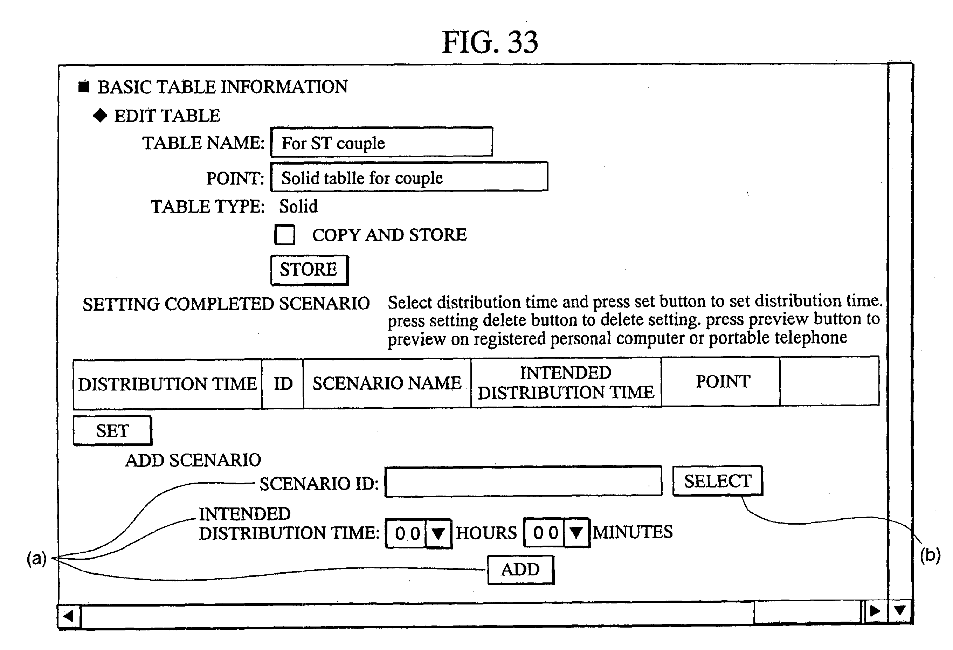

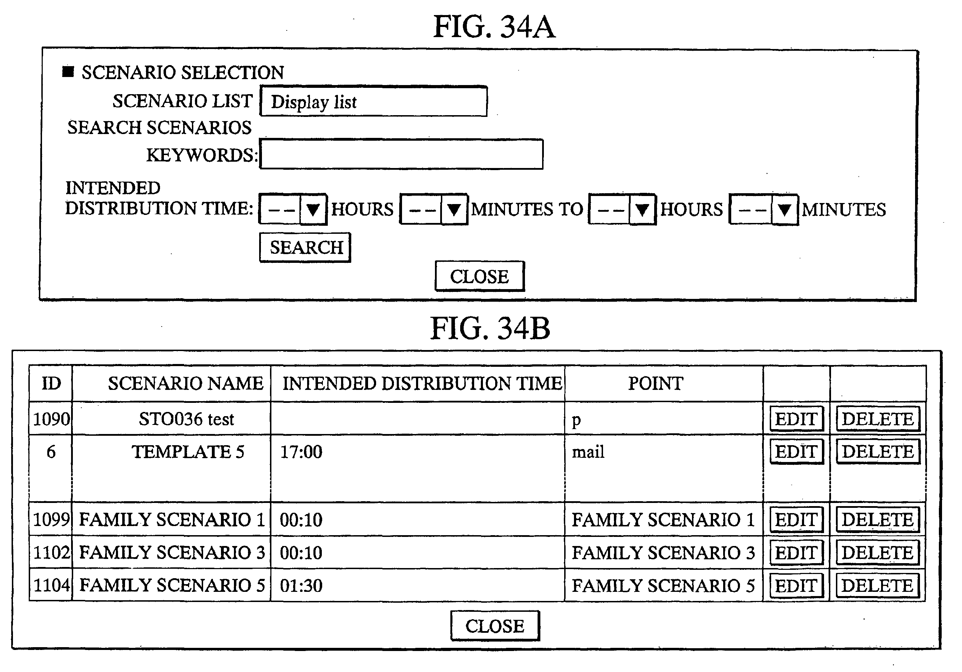

When newly creating a table, the table name and the table type (solid formation or offset formation) are inputted upon the table creation and editing screen shown in FIG. 32, the create new button (the reference symbol (a)) is clicked, and the screen changes over to the table basic information input screen (FIG. 33). In FIG. 33, the ID of the scenario for which the table is to be set and the time for distribution are inputted, and the add button (the reference symbol (a)) is clicked. Furthermore, the select button (the reference symbol (b)) is clicked, and, after the screen has changed to the scenario selection screen of FIG. 34A, the list display button (the reference symbol (b)) is clicked, and a scenario is selected from among the scenario list of FIG. 34B. Furthermore, in FIG. 34A, a search may also be performed by inputting a keyword for a scenario name in the keyword input field (the reference symbol (c)). In the above manner, a table ID is set for the table which has been created, and it is registered in the table list display (the reference symbol (a)) of FIG. 32.

### 3) Formation creation

### a) About formations

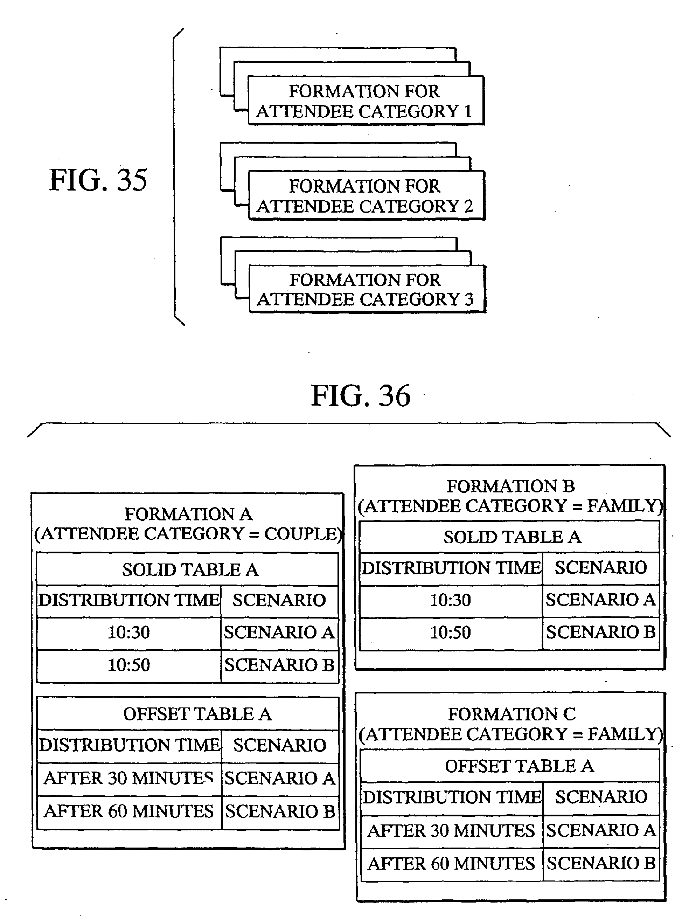

After having created a table, a formation is created. Here, by "formation" is meant a distribution schedule which is provided for each type of category information, as shown in FIG. 35; and either or both of a solid table or an offset table may be provided, as shown in FIG. 36.

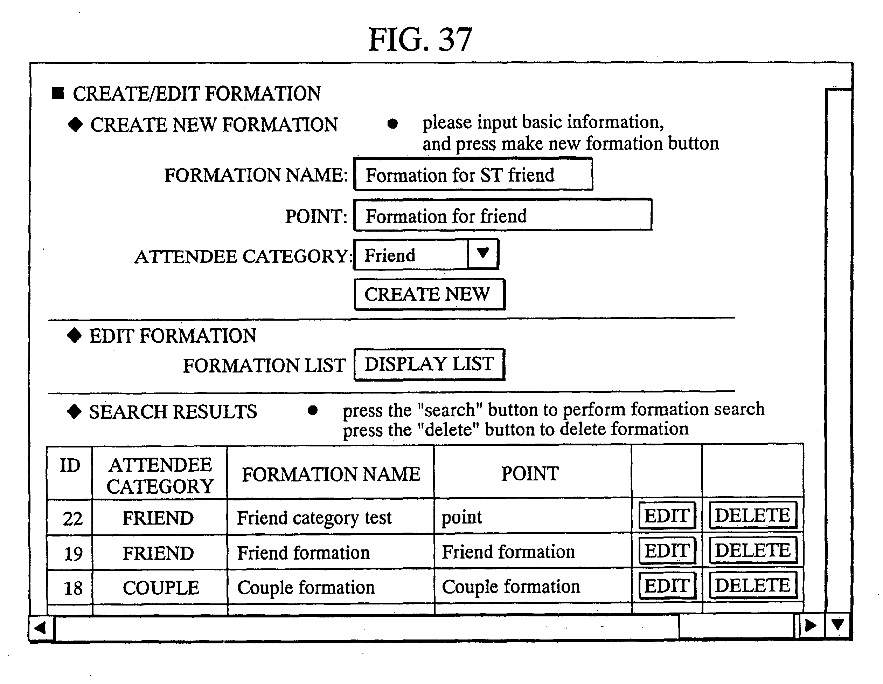

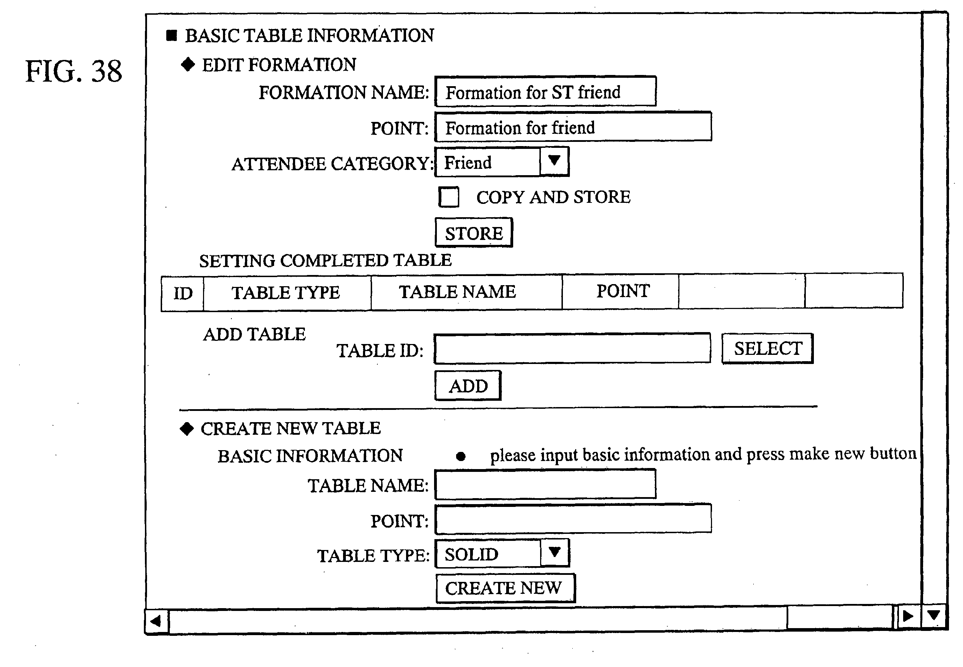

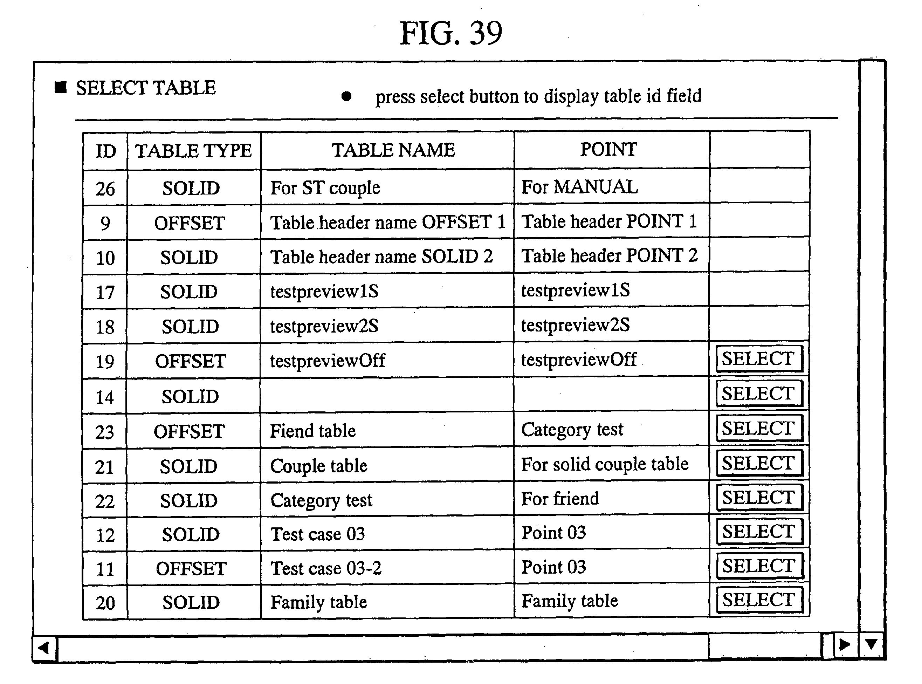

And, when newly creating a formation, the formation name and the category information are inputted upon the formation creation and editing screen shown in FIG. 37, and the create new button (the reference symbol (a)) is clicked. And the screen changes to the formation basic information setting screen shown in FIG. 38, and a table ID to be added to the formation is inputted, or, by clicking the select button for the table which is to be set for the formation from upon the table selection screen of FIG. 39 which is outputted by clicking the select button, the table is set for the formation. By doing this, the table is set for the formation, and a formation ID is set for the formation which has been created and is registered in the list of formations of FIG. 37 (the reference symbol (b)).

### 4) Component creation

### a) About components

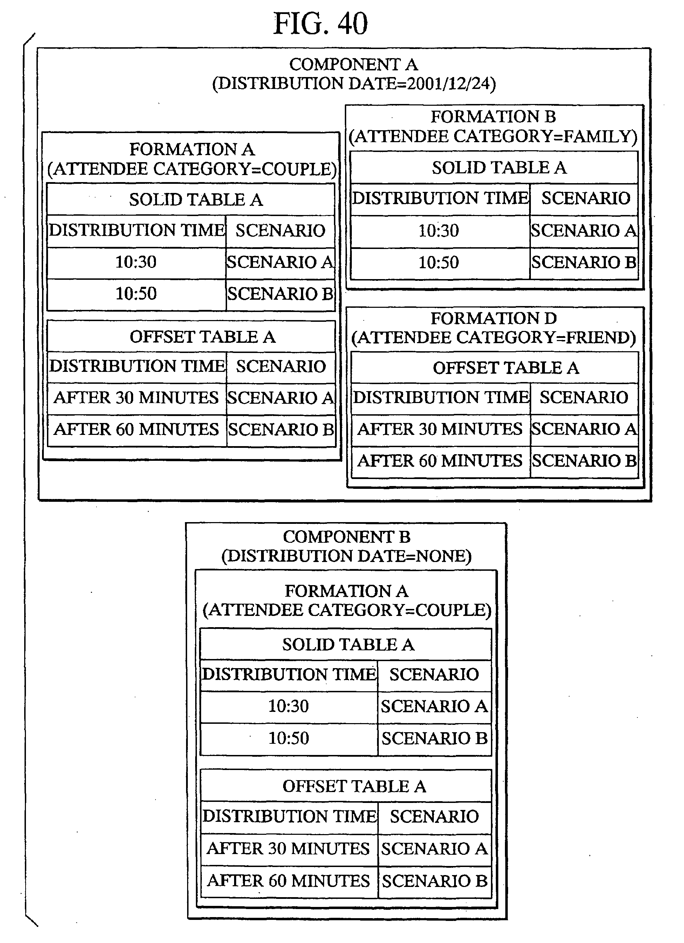

After having created a formation, the setting of the components is performed. Here, by "component" is meant a distribution schedule for within a time period which is set in advance, such as once per day, once per week, or the like, and to which at least one formation is set. Furthermore, a distribution year, month, and day are set for the component. A list of these components is shown in FIG. 40. In this figure, in the component A, three formations are set for the category information couple, family, and friend, while, in the component B, one formation is set for the category information couple.

### b) Creating a component

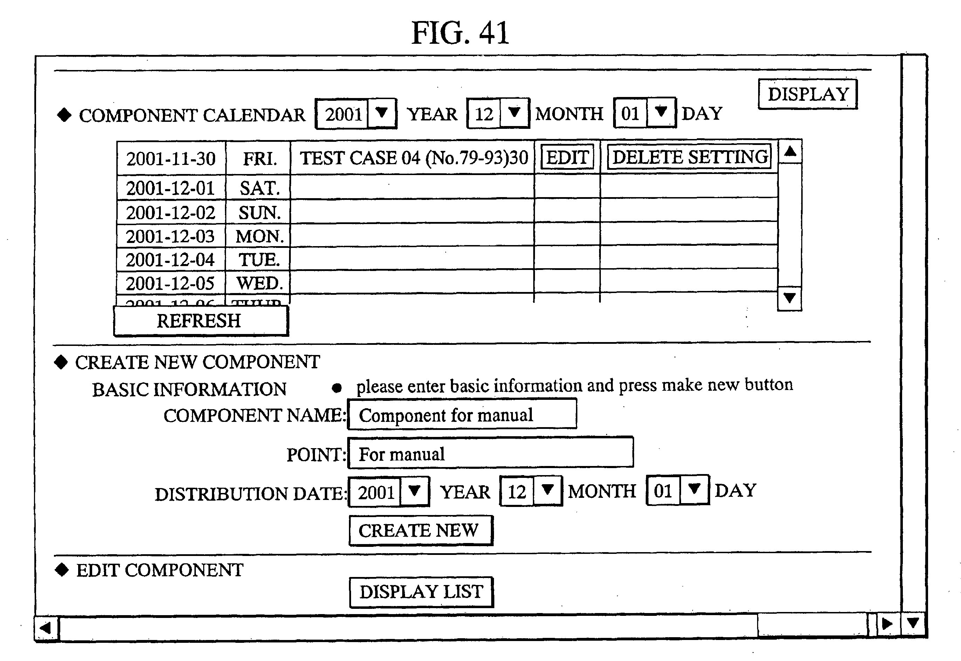

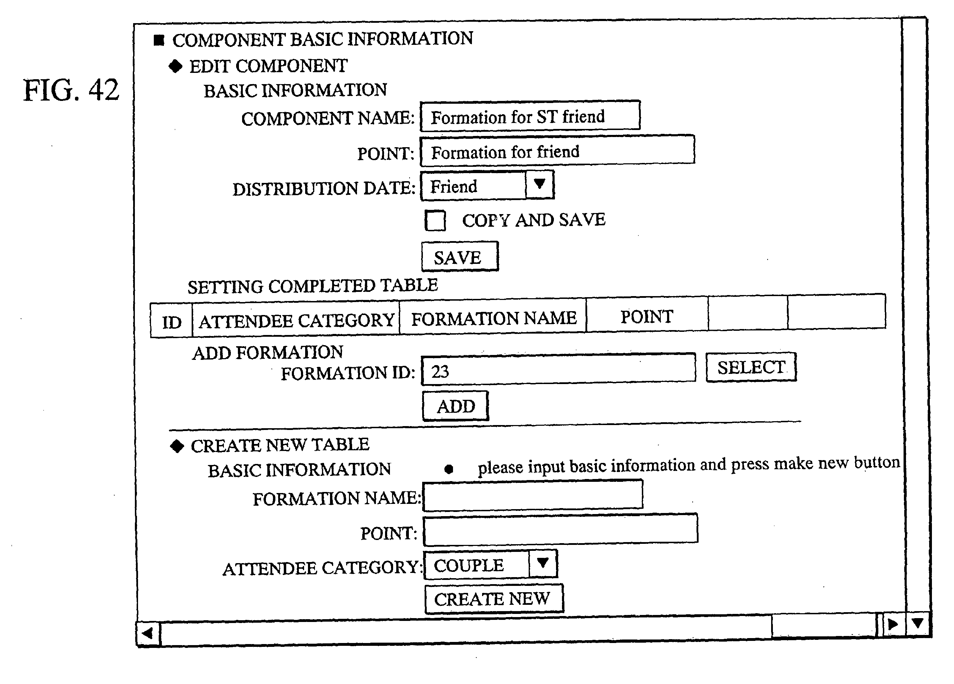

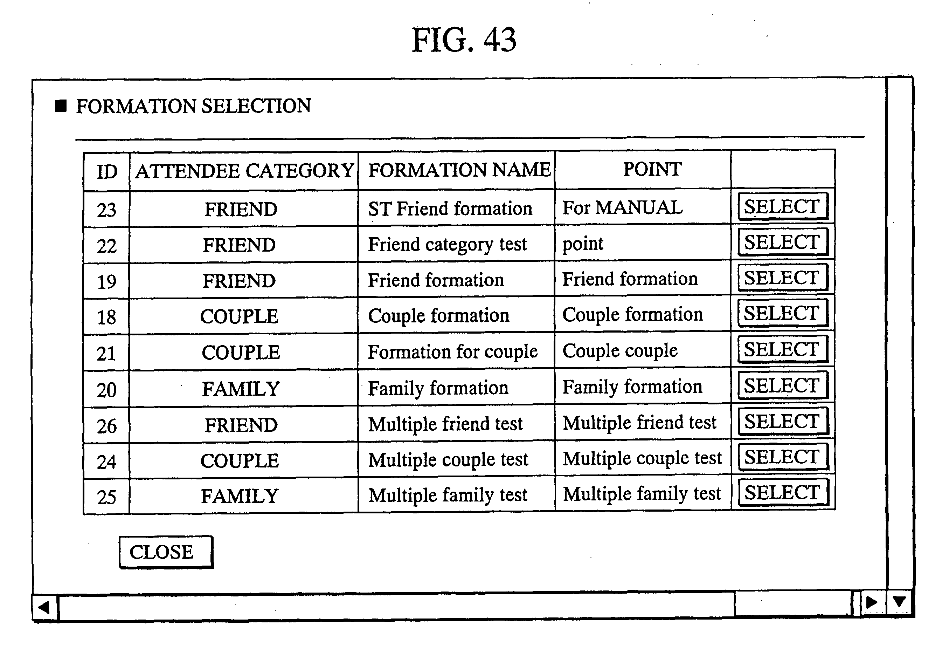

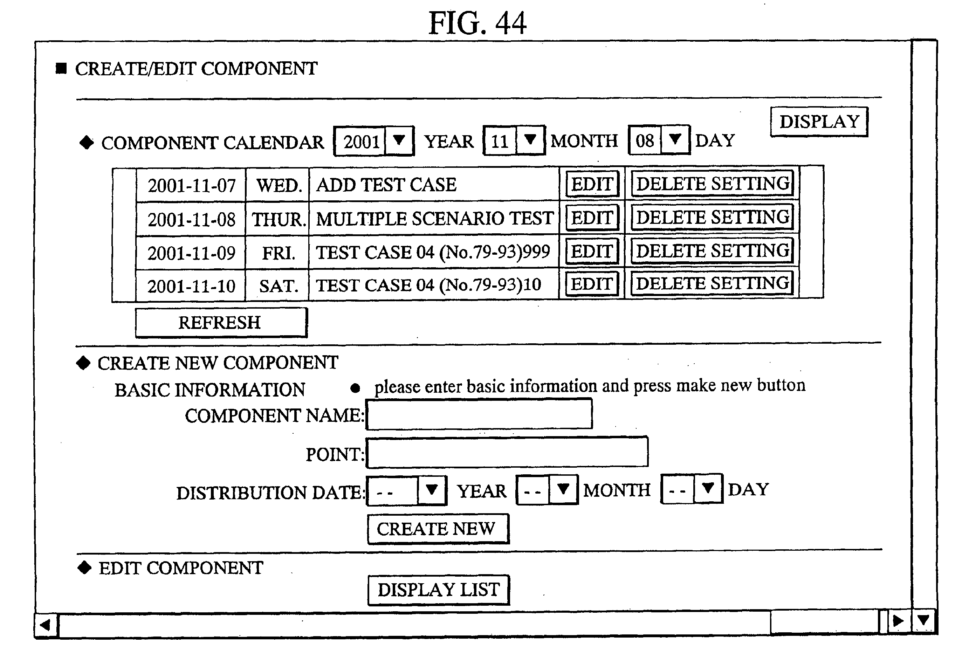

When creating a component, the component name and day for distribution are inputted on the component creation and editing screen of FIG. 41, the create new button (the reference symbol (a)) is clicked, and the screen changes over to the component basic information setting screen shown in FIG. 42. And, on this component basic information setting screen, a formation ID to be set for the component is inputted and the add button (the reference symbol (a)) is clicked, and furthermore the select button (the reference symbol (b)) is clicked which causes the formation selection screen shown in FIG. 43 to be displayed, and the select button for that formation among the formations which have been displayed which is to be set is clicked, and the formation is set for the component. And the component ID is set for the component which has been set, and a component calendar for checking the schedule of the component shown in FIG. 44 (the reference symbol (a)) is registered.

### c) Registering the components in a distribution schedule

When starting the distribution of information for distribution based upon a component which has been created, the refresh button of FIG. 44 (the reference symbol (b)) is clicked. By doing this, it is reflected upon the system of the information distribution server 1, and a scenario according to the schedule which has been set is distributed to the portable terminal in correspondence to the category information.

It should be understood that although, in the embodiment explained above, the explanation was made in terms of the case of the information distribution system and the totaling system being provided within a compound business facility, alternatively, it would also be acceptable to arrange to provide the information distribution system 10 and the totaling system 2 to some area which is not in a compound business facility, but rather to within a facility of which the range is limited, provided that it was possible to distribute information which is related to guiding within said facility. For example, it would be possible to utilize the present invention, for example, in a event space such as a shopping mall, a building, an amusement park, a museum, an art gallery, an exhibition or the like, or within a compound or an independent facility such as a theme park, and to distribute guide information or the like within the facility.

Furthermore, it is acceptable for what is meant by a compound or an independent facility not to be an actual structure, and, accordingly the present invention may also be utilized outdoors for any area or place, provided that it is capable of distributing information for distribution according to that area or place.

Furthermore, it would also be acceptable to perform the information distribution procedure and the totaling procedure by recording a program for implementing the functions of the registration information reception section 11, the signal distribution section 14, and the information for distribution management section 15 of the information server 1 of FIG. 1, and the functions of the information acquisition section 21 and the totaling section 23 of the totaling system 2 of FIG. 1, upon a recording medium which is capable of being read in by a computer, and by reading this program which has been recorded upon the recording medium into a computer system, and executing it. It should be understood that here, "computer system", is also meant to include an OS or hardware such as peripheral devices.

Furthermore, the term "computer system" is also intended, if the WWW system is being utilized, to include a home page provision environment (or a display environment).

Yet further, the term "recording medium which can be read in by a computer" refers to a transportable medium like a flexible disk, an opto-magnetic disk, a ROM, a CD-ROM or the like, or a storage device such as a hard disk or the like which is housed within a computer system. Furthermore, the term "recording medium which can be read in by a computer" also includes a device which automatically stores a program for a short time period, like a communication line when dispatching a program via a communication circuit such as a network such as the internet or the like or a telephone circuit or the like, or a device which temporarily stores a program, such as, in this case, a volatile memory within a computer system which acts as a server or a client. Furthermore, the above described program may also be one for implementing a portion of the function described above; and, yet further, it may also be one which can implement the above described function in combination with a program which is already recorded in a computer system.

In the above, embodiments of this invention have been described in detail with reference to the figures, but its concrete structure is not to be considered as being limited to these embodiments; it also may include various other arrangements, as long as they do not depart from the gist of the present invention.

### Industrial Applicability

As has been explained above, since, according to this invention, the signal destination information is obtained, a correspondence is set up between the information for distribution and the distribution time point at which it should be distributed and is stored, and, based upon the distribution time point, the information for distribution is dispatched based upon the distribution destination information, accordingly it is possible to dispatch the information for distribution to the portable terminal based upon a schedule. Since, due to this, it is possible to distribute the information for distribution to the portable terminal at the appropriate time instant, accordingly the benefit is obtained that the user of the portable terminal is able to obtain the necessary information in a timely manner without overlooking any of it.

Furthermore since, according to the present invention, it is arranged to obtain the signal destination information, and to distribute the information for distribution based upon the passage of time from the start of distributing the information for distribution to the portable terminal whose signal destination information has been obtained, accordingly, it is possible to dispatch the information for distribution to the portable terminal according to the passage of time from the start of distribution.

Furthermore since, according to the present invention, it is arranged to distribute guide information for guiding within a facility, accordingly it is possible simply to create information for guiding within the facility which each enterprise within the facility possesses, and to dispatch it in a timely manner to the persons who are visiting; and, furthermore, since it is possible to convey information about the interior of the facility to the persons who are visiting, accordingly it becomes possible to heighten the loitering time and the roamability by which the facility is utilized, to enhance the purchasing ratio of the persons who are visiting, and to increase the repetition ratio (the re-attendance ratio) and the re-utilization ratio of the persons who are visiting. Furthermore, since it is possible to convey information about the interior of the facility to the persons who are visiting, accordingly the benefits are reaped that it is possible to make it easier to become informed about and to utilize the enterprises within the facility, and it is possible to increase the numbers of persons who visit the enterprises, which contributes to overall enhancement. Furthermore, it provides a system for guiding persons who visit a facility which, from the point of view of a person who is visiting, makes it possible for him simply to come into possession of guide information about the various enterprises within the facility. Yet further, since it is possible to distribute guide information within the facility based upon distribution time points, and since it is possible to distribute information in a timely manner to the users about various types of events and the like which are being performed in this facility at time points which are determined in advance, accordingly, along with being able to transmit the information for distribution to the user in a convenient manner, it is possible to enable roaming within the facility without missing any events, so that it is possible to enhance the amusement level within the facility. Furthermore, since it is possible to distribute the information for guiding within the facility based upon the passage of time from the start of distribution of the information for distribution, it is possible to distribute the necessary information for roaming within the facility to a person who is visiting according to the passage of time after he has come to the facility, and thereby it is possible to provide fresh information to the person who is visiting for guiding him within the facility every time a time period which he has spent within the facility elapses, so that it is possible to impart interest to his roaming, and it becomes possible to experience roaming within the facility without becoming bored with the facility.

Furthermore since, according to the present invention, it is arranged to receive application within the facility from the persons who visit and who are to become the objects of distribution of the information for distribution, accordingly it is possible to distribute the information for distribution while limiting it to persons who visit the facility.

Furthermore, according to the present invention, category information is set in the signal destination information of the persons who are visiting, and distribution category information is provided in the information for distribution which specifies the object for distribution thereof. And, since it is arranged to distribute the information of the distribution category which agrees with the category information, it is possible to distribute the information for distribution according to the type (the taste or preference) or the needs of the persons who are visiting.

Furthermore since, according to the present invention, ID information and utilization information are obtained, and they are stored with a correspondence being established between them, accordingly, by distributing the information for distribution, it is possible to apprehend the utilization circumstances (including the situation with regard to their spend) of the facility by the persons who are visiting, and their degree of satisfaction with regard to the facility.

Furthermore since, according to the present invention, it is arranged to perform distribution to the persons who visit while ensuring that information which is related to electronic coupons is included in the information for distribution, accordingly it is possible to stimulate utilization of the facility by the persons who are visiting.

Furthermore since, according to the present invention, it is arranged to make totals which include either or both of information about the time instant of utilization of an enterprise which is provided within said facility, and information about the amount of utilization money which has been utilized by the person who is visiting at said enterprise, accordingly, by measuring the results of the information for distribution which has been presented to the persons who are visiting, it is possible to apprehend in more detail the utilization circumstances (including the situation with regard to their spend) of the facility by the persons who are visiting, by the distribution of the information for distribution, and thereby, by referring to the utilization circumstances (including the situation with regard to their spend) of the facility by the persons who are visiting, by the distribution of the information for distribution, it becomes possible to distribute the information for distribution in a more efficient manner.

Furthermore, according to the present invention, a person who is visiting is able to receive the information for distribution in a timely manner easily via the portable terminal while moving about, so that it is possible for him to receive detailed information about the various enterprises, and it never happens that he goes too far without knowing about the existence of various enterprises within the facility; and it becomes easy for him to know information about the various enterprises, and it is possible for him to roam while utilizing his time effectively.

Yet further, according to the present invention, from the point of view of the management, it is possible to obtain and to analyze the reactions of the persons who are visiting to the contents, and it is possible to obtain and analyze the type and property information of the persons who are visiting, so that it is possible to obtain certain attendance records of the persons are visiting. Furthermore, from the point of view of the management, it is possible easily and also simply to perform determination of the creation and the distribution of detailed product information, menu information, and service information which is possessed by each enterprise, and to distribute it to the persons who are visiting. Furthermore, from the point of view of the management, along with it being possible also to distribute timely information for distribution for the current date, it is also possible to distribute information which is appropriate for the type of the person who is visiting. Furthermore, it becomes possible to simulate the distribution of information which is held by the management side, and to apprehend its results from the point of view of the attendees.

## Claims

1. An information distribution server which is utilized in an information distribution system which distributes information for distribution to a portable terminal,
**characterized by** comprising:
a registration information reception means which obtains signal destination information, which is information for specifying a portable terminal which is to become the object of distribution of said information for distribution, as registration information, and accepts it as a registration;
an information for distribution database which stores information for distribution for which a time instant at which it should be distributed has been set in advance as a distribution time point; and
a distribution means which, based upon the distribution time point which is set in the information for distribution which has been stored in said information for distribution database, distributes said information for distribution to the portable terminal to which the signal destination information which is included in said registration information is set.

2. An information distribution server which is utilized in an information distribution system which distributes information for distribution to a portable terminal,
**characterized by** comprising:
a registration information reception means which obtains signal destination information, which is information for specifying a portable terminal which is to become the object of distribution of said information for distribution, as registration information, and accepts it as a registration;
an information for distribution database which stores information for distribution for which a time at which it should be distributed, based upon the passage of time from the start of distribution of information for distribution to said portable terminal, has been set in advance as a time for distribution; and
a distribution means which, based upon the time for distribution which is set in the information for distribution which has been stored in said information for distribution database, and upon the passage of time from the start of distribution of information for distribution to said portable terminal, distributes said information for distribution to the portable terminal to which the signal destination information which is included in said registration information is set.

3. An information distribution server as described in Claim 1 or Claim 2, **characterized in that**:
in said registration information, there is included category information which shows a category for a person who is visiting and is carrying said portable terminal;
distribution category information which specifies a category to be an object for distribution is further set in advance in said information for distribution; and
said distribution means, when distributing said information for distribution, distributes said information for distribution to a portable terminal for which has been set signal destination information for which category information is set which corresponds to distribution category information which has been set in said information for distribution.

4. An information distribution server which is utilized in an information distribution system which distributes information for distribution to a portable terminal,
**characterized by** comprising:
a registration information reception means which obtains signal destination information, which is information for specifying a portable terminal which is to become the object of distribution of said information for distribution, and category information, which shows a category for a person who is visiting and is carrying said portable terminal, as registration information, and accepts it as a registration;
an information for distribution database which stores information for distribution for which distribution category information which specifies a classification for an object of distribution has been set in advance; and
a distribution means which, when distributing said information for distribution, distributes said information for distribution to a portable terminal which has been prescribed in the signal destination information for which category information is set which corresponds to distribution category information which has been set in said information for distribution.

5. An information distribution server as described in Claim 3 or Claim 4, **characterized in that** at least one of property, intention, time zone, and place is included in said category information and said distribution category information.

6. An information distribution server as described in any one of Claim 1 to Claim 5, **characterized in that** said information for distribution is guide information for guiding within a facility.

7. An information distribution server as described in any one of Claim 1 to Claim 6, **characterized in that** said information for distribution is information which can be distributed electronically.

8. An information distribution server as described in any one of Claim 1 to Claim 7, **characterized in that** said information for distribution includes information related to at least one of amusement information, a moving image, a game, a program, an electronic coupon, and a ticket.

9. An information distribution server as described in any one of Claim 1 to Claim 8, **characterized in that** said obtaining of said registration information is performed within said facility.

10. A totaling system which totalizes the utilization circumstances of information for distribution which has been distributed by an information distribution server as described in any one of Claim 1 to Claim 9, **characterized by** comprising:
an ID information obtaining means which obtains ID information which, along with being established in correspondence with the signal distribution information, is appended to said information for distribution and is distributed;
a utilization information obtaining means which obtains utilization information, which is information related to utilization of the facility by the person who is visiting and who is carrying said portable terminal; and
a total information database which establishes and stores a correspondence between said ID information which is obtained by said ID information obtaining means and said utilization information which is obtained by said utilization information obtaining means.

11. A totaling system as described in Claim 10,
**characterized in that** said information for distribution to which said ID information is appended includes information related to electronic coupons.

12. A totaling system as described in Claim 10 or Claim 11, **characterized in that** said utilization information includes either or both of information about the time instant of utilization of an enterprise which is provided within said facility, and information about the amount of utilization money which has been utilized by the person who is visiting at said enterprise.

13. An information distribution server which is utilized in an information distribution system which distributes information for distribution to a portable terminal,
**characterized by** comprising an information for distribution management section which sets, in said information for distribution:
information of a distribution time point which is specified, or information of a time at which distribution must be performed which is determined based upon the passage of time from the start of distribution of the information for distribution to said portable terminal; and
distribution category information which specifies a category which is included in the registration information of the object for dispatch.

14. An information distribution system which comprises an information distribution server which distributes information for distribution to a portable terminal, and a totaling system which totals the utilization circumstances of said information for distribution which is distributed by said information distribution server, **characterized in that**:
said information distribution server comprises:
a registration information reception means which obtains signal destination information, which is information for specifying a portable terminal which is to become the object of distribution of said information for distribution, as registration information, and accepts it as a registration;
an information distribution database which stores information for distribution for which a time instant at which it should be distributed is set in advance as a distribution time point, or information for distribution for which a time at which it should be distributed which is determined based upon the passage of time from the start of distribution of the information for distribution to said portable terminal is set in advance as a time for distribution; and
a distribution means which performs distribution to the portable terminal for which the signal destination information which is included in said registration information is set, based upon the distribution time point or the time for distribution which is set in the information for distribution which has been stored in said information for distribution database;
and said totaling system comprises:
an ID information obtaining means which obtains ID information which, along with being established in correspondence with said signal distribution information, is appended to said information for distribution and is distributed;
a utilization information obtaining means which obtains utilization information, which is information related to utilization of the facility by the person who is visiting and who is carrying said portable terminal; and
a total information database which establishes and stores a correspondence between said ID information which is obtained by said ID information obtaining means and said utilization information which is obtained by said utilization information obtaining means.

15. An information distribution method which is utilized by an information distribution system which distributes information for distribution to a portable terminal,
**characterized in that**:
signal destination information, which is information for specifying a portable terminal which is to become the object of distribution of said information for distribution, is obtained as registration information, and is accepted as a registration;
information for distribution for which a time instant at which it should be distributed is set in advance as a distribution time point, or information for distribution for which a time at which it should be distributed which is determined based upon the passage of time from the start of distribution of the information for distribution to said portable terminal is set in advance as a time for distribution, is stored; and
distribution is performed to the portable terminal for which the signal destination information which is included in said registration information is set, based upon the distribution time point or the time for distribution which is set in said stored information for distribution.

16. A totaling method which totals the utilization circumstances of information for distribution which has been distributed by an information distribution server,
**characterized in that**:
ID information is obtained and, along with being established in correspondence with signal distribution information, is appended to said information for distribution and is distributed;
utilization information, which is information related to utilization of a facility by a person who is visiting and who is carrying said portable terminal, is obtained; and
a correspondence is established and stored between said ID information which has been obtained and said utilization information.

17. A recording medium on which is recorded an information distribution program, which can be read in by a computer, which is used in an information distribution system which distributes information for distribution to a portable terminal, and which causes a computer to execute:
a procedure of obtaining signal destination information, which is information for specifying a portable terminal which is to become the object of distribution of said information for distribution, as registration information, and accepting it as a registration;
a procedure of storing information for distribution for which a time instant at which it should be distributed is set in advance as a distribution time point, or information for distribution for which a time at which it should be distributed which is determined based upon the passage of time from the start of distribution of the information for distribution to said portable terminal is set in advance as a time for distribution; and
a procedure of performing distribution to the portable terminal for which the signal destination information which is included in said registration information is set, based upon the distribution time point or the time for distribution which is set in said information for distribution which has been stored.

18. A recording medium on which is recorded a totaling program, which can be read in by a computer, which totals the utilization circumstances of information for distribution which has been distributed by an information distribution server, and which causes a computer to execute:
a procedure of obtaining ID information and, along with establishing it in correspondence with signal distribution information, appending it to said information for distribution and distributing them;
a procedure of obtaining utilization information, which is information related to utilization of a facility by a person who is visiting and who is carrying said portable terminal; and
a procedure of establishing and storing a correspondence between said ID information which has been obtained and said utilization information.

19. An information distribution program which is used in an information distribution system which distributes information for distribution to a portable terminal, and which is **characterized by** causing a computer to execute:
a procedure of obtaining signal destination information, which is information for specifying a portable terminal which is to become the object of distribution of said information for distribution, as registration information, and accepting it as a registration;
a procedure of storing information for distribution for which a time instant at which it should be distributed is set in advance as a distribution time point, or information for distribution for which a time at which it should be distributed which is determined based upon the passage of time from the start of distribution of the information for distribution to said portable terminal is set in advance as a time for distribution; and
a procedure of performing distribution to the portable terminal for which the signal destination information which is included in said registration information is set, based upon the distribution time point or the time for distribution which is set in said information for distribution which has been stored.

20. A totaling program which totals the utilization circumstances of information for distribution which has been distributed by an information distribution server, and which is **characterized by** causing a computer to execute:
a procedure of obtaining ID information and, along with establishing it in correspondence with signal distribution information, appending it to said information for distribution and distributing them;
a procedure of obtaining utilization information, which is information related to utilization of a facility by a person who is visiting and who is carrying said portable terminal; and
a procedure of establishing and storing a correspondence between said ID information which has been obtained and said utilization information.
